# EUROPÄISCHE PATENTSCHRIFT

(11) **EP 1 807 312 B1**
(45) Veröffentlichungstag und Bekanntmachung des Hinweises auf die Patenterteilung: **16.07.2008**
(21) Anmeldenummer: 06776470.4
(22) Anmeldetag: 27.07.2006
(51) Int. Cl.: B65C 9/00, B65C 9/46

(54) **VORRICHTUNG UND VERFAHREN ZUR BEREITSTELLUNG VON AKTIVIERTEN INDIKATOREN ZUR WARENKENNZEICHNUNG**
DEVICE AND METHOD FOR PROVIDING ACTIVATED INDICATORS FOR PRODUCT LABELLING
DISPOSITIF ET PROCEDE POUR PREPARER DES INDICATEURS ACTIVES POUR LE MARQUAGE DE MARCHANDISES

(30) Priorität: 21.10.2005 DE 102005051471
(43) Veröffentlichungstag der Anmeldung: 18.07.2007
(60) Teilanmeldung: 07022513.1
(73) Patentinhaber: Bizerba GmbH & Co. KG, 72336 Balingen (DE)
(72) Erfinder: Uber, Markus, 72793 Pfullingen (DE); Bernhard, Jürgen, 72186 Empfingen (DE); Feuerstack, Michael, 44265 Dortmund (DE); Jannasch, Uwe, 44388 Dormund (DE)
(74) Vertreter: Manitz, Finsterwald & Partner GbR
(86) Internationale Anmeldenummer: PCT/EP2006/007457
(87) Internationale Veröffentlichungsnummer: WO 2007/045290

(56) Entgegenhaltungen:
- WO-A-96/28714
- WO-A-98/38112
- WO-A-03/077227
- DE-A1- 19 803 208
- DE-A1- 19 929 849

## Beschreibung

Die Erfindung betrifft eine Vorrichtung zur Bereitstellung von aktivierten temperatursensitiven und/oder zeitsensitiven Indikatoren zur Warenkennzeichnung gemäss dem Oberbegriff des Anspruchs 1, und ein Verfahren zur Bereitstellung solcher Indikatoren gemäss dem Oberbegriff des Anspruchs 29, und wie bekannt aus der DE 198 03 208 C2

Aus dem Stand der Technik sind temperatur- und/oder zeitsensitive Indikatoren bekannt, die beispielsweise auf einem Etikett, einer Produktverpackung oder direkt auf einem Produkt angeordnet werden können. Solche Indikatoren sind dazu geeignet, anzuzeigen, ob ein dem Indikator zugeordnetes Produkt während des Zeitraums, in dem es mit dem Indikator versehen war, ausreichend kühl gelagert wurde und/oder ob das Produkt ein vorbestimmtes Alter überschritten hat. Es existieren Indikatoren, die ausschließlich zeitsensitiv und damit unabhängig von der jeweiligen Temperatur sind, so dass sie ausschließlich das Alter eines Produkts kennzeichnen können. Weiterhin sind zeit- und temperatursensitive Indikatoren bekannt, welche sich sowohl in Abhängigkeit von der jeweils verstrichenen Zeit als auch in Abhängigkeit von der Temperatur, der sie jeweils ausgesetzt sind, verändern. Schließlich sind auch Indikatoren bekannt, die ausschließlich temperatursensitiv ausgebildet sind. Die vorliegende Erfindung bezieht sich auf alle genannten Arten von Indikatoren.

Aus dem deutschen Patent DE 198 03 208 C2 ist ein Substrat zum Anbringen an alterungs- und temperaturempfindlichen Produkten oder deren Verpackungen mit einem im Bereich des Substrats angeordneten Zeit-Temperatur-Indikator bekannt. Die Startzeit dieses Zeit-Temperatur-Indikators kann durch Lichteinstrahlung, insbesondere durch UV-Lichteinstrahlung, beliebig eingestellt werden, wobei der Indikator eine Matrix und mindestens eine darin eingebettete reversible wiederaufladbare kristalline Substanz enthält, die fotochrome Eigenschaften auf der Basis von Transferreaktionen aufweist.

Durch die fotochromen Eigenschaften lässt sich der Indikator fotoinduziert durch Bestrahlung färben, wobei im Anschluss an die Färbung eine zeitabhängige und temperaturabhängige Entfärbung eintritt.

Es ist bekannt, einen als Fälschungssicherung dienenden irreversiblen fotoempfindlichen Indikator als Überzug auf den Zeit-Temperatur-Indikator aufzubringen. Beispielsweise wird das Material des irreversiblen Indikators rot, wenn es UV-Licht ausgesetzt wird.

Der Erfindung liegt die Aufgabe zugrunde, eine Vorrichtung sowie ein Verfahren der eingangs genannten Art bereitzustellen, mittels welchem sich auf einfache Weise manipulationssichere, aktivierte Indikatoren bereitstellen lassen.

Gemäß einer ersten, erfindungsgemäßen Variante wird diese Aufgabe gelöst durch eine Vorrichtung gemäß Anspruch 1 und insbesondere dadurch, dass eine Bandführungseinrichtung vorgesehen wird, durch welche ein Band führbar ist, über das in einem Applikationsbereich der Bandführungseinrichtung ein Schutzfilter; insbesondere ein UV-Schutzfilter auf einen Indikator nach dessen Aktivierung aufbringbar ist.

Über ein Band lässt sich ein solches Schutzfilter trocken auf einen Indikator aufbringen. Es lässt sich auf einfache Weise ein Indikator abdecken, um eine erneute Aktivierung durch Licht, insbesondere UV-Licht, zu verhindern. Die Bandführungseinrichtung lässt sich beispielsweise in eine Etikettiervorrichtung integrieren, so dass sich eine Bereitstellungsvorrichtung realisieren lässt, welche einfach und kompakt ausgebildet ist. Beispielsweise lässt sich diese als Handgerät oder als automatischer Etikettierer ausbilden.

Es lassen sich aktivierte Etiketten in einem insbesondere kontinuierlichen Durchlaufprozess herstellen und damit in kurzen Taktzeiten beispielsweise zum automatischen Aufbringen bereitstellen.

Im Folgenden werden bevorzugte Ausführungsformen der ersten, erfindungsgemäßen Variante erläutert.

Das erfindungsgemäß zum Einsatz gelangende Band kann gemäß einer ersten Alternative direkt als Schutzfilterband ausgebildet werden. Gemäß einer zweiten Alternative kann das von der Bandführungseinrichtung geführte Band ein Trägerband sein, auf dem selbstklebende Schutzfilteretiketten angeordnet sind, die in bekannter Weise von dem Trägerband lösbar sind, um anschließend auf einen Indikator aufgebracht zu werden. Bei der ersten Alternative besteht das Band beispielsweise aus Linerless-Etiketten, welchen eine Schutzfilterfunktion immanent ist und die bei Applikation auf den Indikator lediglich von einem angrenzenden Linerless-Etikett abgetrennt werden.
Bei der zweiten Alternative hingegen befindet sich das Schutzfiltermaterial auf einer Oberfläche eines Trägerbandes, wobei das Schutzfiltermaterial vom Band nach Art eines Trägeretiketts oder mittels eines Transferverfahrens auf eine Oberfläche des Indikators übertragen werden kann.

Wenn das Schutzfiltermaterial in Form von selbstklebenden Schutzfilter-Trägeretiketten auf den Indikator aufgebracht wird, ist es von Vorteil, wenn das Schutzfiltermaterial in den Klebstoff der selbstklebenden Schutzfilteretiketten integriert ist. Der mit einer solchen Klebstoffschicht versehene Träger eines solchen Etiketts bildet dann bei aufgebrachtem Schutzfilter eine mechanische Schutzschicht für das Schutzfiltermaterial, welches sich in diesem Fall sandwichartig zwischen Indikator und Träger befindet.

Beim Einsatz eines Transferverfahrens hingegen ist es möglich, das von der Bandführungseinrichtung geführte Band als Transferband, insbesondere als Thermotransferband, auszubilden. Von einem solchen Transferband lässt sich Schutzfiltermaterial auf einen Indikator übertragen. Beim Einsatz eines Thermotransferbands ist zusätzlich auch ein Bedrucken eines Etiketts, einer Produktverpackung oder eines Produkts mit Schutzfiltermaterial möglich. Bei Einsatz eines entsprechend geeigneten Transferbands lässt sich mit diesem also auch ein Etikett, eine Produktverpackung oder ein Produkt außerhalb eines Indikators mit Informationen, wie beispielsweise Warendaten, bedrucken.

Von Vorteil ist es, wenn innerhalb der Vorrichtung eine Etikettenfördereinrichtung zur Förderung von mit Indikatoren versehenen Etiketten, insbesondere zur Förderung von Linerless- oder Trägeretiketten vorgesehen ist, deren Förderstrecke sich durch den Applikationsbereich der Bandführungseinrichtung erstreckt. So können mit Indikatoren versehene Etiketten an der insbesondere stationären Bandführungseinrichtung vorbeigefördert werden, wobei während dieses Fördervorgangs ein Aufbringen des Schutzfilters auf den jeweiligen Indikator erfolgt.

Der Etikettenfördereinrichtung kann eine Aktivierungsvorrichtung zur Aktivierung von Indikatoren mittels Licht, insbesondere mittels UV-Licht, zugeordnet werden, wobei diese Aktivierungsvorrichtung in Förderrichtung der Etikettenfördereinrichtung dem Applikationsbereich der Bandführungsvorrichtung vorgeordnet ist. Durch eine solche Anordnung läßt sich innerhalb einer einzigen, einheitlichen Vorrichtung eine Aktivierung und eine zeitlich daran anschließende Schutzfilteraufbringung realisieren.

Vorteilhaft ist es, wenn mindestens eine Aufbringeinrichtung vorgesehen ist, bezüglich welcher das Band durch die Bandführungseinrichtung so geführt ist, dass ein Schutzfilter auf einen Indikator aufbringbar ist. Die Aufbringeinrichtung sorgt dafür, dass mittels des Bands (insbesondere direkt oder über Materialübertragung) ein Schutzfilter auf dem Indikator hergestellt wird.

Es kann ferner mindestens eine, insbesondere der Etikettenfördereinrichtung zugeordnete Druckeinrichtung vorgesehen werden. Eine solche Druckeinrichtung lässt sich beispielsweise dazu nutzen, Schutzfiltermaterial auf den Indikator zu übertragen. Es ist jedoch auch möglich, über die Druckeinrichtung Etiketten mit Informationen oder Schmuckelementen zu bedrucken.

Innerhalb der Gesamtvorrichtung sind verschiedene Positionen der Druckeinrichtung möglich:
Die Druckeinrichtung kann in Förderrichtung der Etikettenfördereinrichtung dem Applikationsbereich der Bandführungseinrichtung vor- oder nachgeordnet werden. In diesen beiden Fällen ist es jedoch nicht möglich, den Schutzfilter mittels der Druckeinrichtung auf den Indikator aufzubringen. Die Druckeinrichtung dient in diesen Fällen vielmehr ausschließlich dazu, Etiketten, Produktverpackungen oder Produkte mit Informationen oder Schmuckelementen zu bedrucken.
Ferner kann die Druckeinrichtung in Förderrichtung der Etikettenfördereinrichtung der Aktivierungsvorrichtung vor- oder nachgeordnet werden. Wenn sie der Aktivierungsvorrichtung vorgeordnet wird, kann die Druckeinrichtung wiederum nur für das Drucken von Informationen oder Schmuckelementen und nicht zum Aufbringen des Schutzfilters auf den Indikator verwendet werden, da das Schutzfilter dann eine Aktivierung verhindern würde. Wenn die Druckeinrichtung jedoch der Aktivierungsvorrichtung nachgeordnet wird, kann sie sowohl für das Drucken von Informationen oder Schmuckelementen als auch zum Aufbringen des Schutzfilters auf den Indikator verwendet werden.

Die mindestens eine Druckeinrichtung umfasst insbesondere einen Druckkopf und ein Gegenelement. Wenn die Druckeinrichtung als Aufbringeinrichtung für einen Schutzfilter verwendet wird, lässt sich über den Druckkopf (welcher insbesondere thermosensitiv ist) eine notwendige Anpresskraft bzw. Wärmebeaufschlagung des Bandes erreichen, um Schutzfiltermaterial aufzubringen.

Beim Einsatz der Druckeinrichtung zum Aufbringen des Schutzfilters auf einen Indikator kann sie im Bereich der Bandführungseinrichtung einen Thermodruckkopf oder eine beheizte Walze aufweisen. Beim Einsatz eines Thermodruckkopfs ist die geometrische Form des aufzubringenden Schutzfilters durch das dem Thermodruckkopf immanente Raster beschränkt. Eine rasterfreie Form des aufzubringenden Schutzfilters lässt sich durch den Einsatz einer beheizten Walze erreichen.

Insbesondere ist die Druckeinrichtung bezüglich ihrer Beaufschlagung des Bandes steuerbar. Durch diese Steuerungsmöglichkeit lässt sich Schutzfiltermaterial gezielt und angepasst an die geometrischen Abmessungen des Indikators auf denselben aufbringen. Es ist somit möglich, nur den Indikator selbst und nicht etwa ein komplettes Etikett mit Schutzfiltermaterial zu bedecken.
Bevorzugt deckt das Schutzfiltermaterial neben dem Indikator auch noch ein Vergleichsfeld, beispielsweise ein Vergleichsfarbenfeld ab. Erfindungsgemäß eingesetzte Indikatoren ändern ihre Farbe in Abhängigkeit von der Zeit und/oder der Temperatur. Über ein festes Vergleichsfarbenfeld lässt sich dann der momentane Zustand des Indikators bestimmen. Wenn das gleiche Schutzfiltermaterial sowohl auf einem Indikator als auch auf einem Vergleichsfeld angeordnet ist, lässt sich die Vergleichbarkeit verbessern, insbesondere wenn der aufgebrachte Schutzfilter für sichtbares Licht nicht völlig transparent ist. Es werden also störende Farbverschiebungen vermieden, da sowohl die Referenzfarben als auch der Indikator von der darüber liegenden Schutzschicht in jeweils identischer Weise beeinflusst werden.

Die mindestens eine Druckeinrichtung wird bevorzugt so ausgestaltet, dass ein Etikett auch gezielt außerhalb des Indikators bedruckbar ist. In diesem Fall kann durch ein und dieselbe Druckeinrichtung sowohl Schutzfiltermaterial auf einen Indikator aufgebracht werden als auch das Etikett außerhalb des Indikators mit Informationen oder Schmuckelementen bedruckt werden, wobei Voraussetzung hierfür ist, dass das Band, von dem Schutzfiltermaterial und Druckfarbe durch die Druckeinrichtung gelöst werden sollen, entsprechend ausgebildet ist.

Ebenso ist es möglich, dass eine erste Druckeinrichtung als Aufbringeinrichtung für ein Schutzfilter und eine zweite Druckeinrichtung zum Bedrucken eines Etiketts außerhalb eines Indikators vorgesehen ist. Die beiden Druckeinrichtungen können dabei in die gleiche Vorrichtung integriert sein, um so aktivierte Indikatoren mit Schutzfilter bereitstellen zu können, welche auf mit Informationen oder Schmuckelementen bedruckten Etiketten angeordnet sind. Die erste Druckeinrichtung muss in Förderrichtung der Etiketten hinter der Aktivierungsvorrichtung vorgesehen werden, wohingegen die zweite Druckeinrichtung an einer beliebigen Stelle der Etikettenförderstrecke angeordnet werden kann.
In einer alternativen Ausführungsform ist es grundsätzlich auch möglich, dass die erfindungsgemäße Vorrichtung lediglich Etiketten mit aktivierten Indikatoren, welche mit Schutzfiltern versehen sind, bereitstellt und diese Etiketten dann beispielsweise einer Etikettiervorrichtung zur Verfügung stellt, in welcher dann erst ein Bedrucken der Etiketten mit Informationen oder Schmuckelementen erfolgt.

Gemäß einer zweiten Variante wird eine Bandführungseinrichtung vorgesehen, durch welche ein Band führbar ist, über das ein Schutzfilter, insbesondere ein UV-Schutzfilter, gemeinsam mit einem Indikator nach dessen Aktivierung in einem Applikationsbereich der Bandführungseinrichtung auf eine insbesondere als Etikett, Verpackung oder Produkt ausgebildete Zielfläche aufbringbar ist.

Im Unterschied zur ersten, erfindungsgemäßen Variante werden in diesem Fall Schutzfilter und Indikator gemeinsam auf die Zielfläche aufgebracht, wobei der Indikator zuvor aktiviert wurde. Diese zweite Variante bietet folgende Vorteile, die mit der ersten Variante nur zum Teil realisiert werden können:
- Es ist nicht nötig, zwangsläufig jedes Etikett mit einem Indikator zu versehen, da über eine gezielt gesteuerte Aktivierung der Bandführungseinrichtung auch Etiketten an dieser Bandführungseinrichtung vorbeigeführt werden können, ohne dass ein Indikator mit Schutzfilter aufgebracht wird. Ein Aufbringen erfolgt vielmehr lediglich bei Bedarf, wobei dieses Aufbringen selbstverständlich nicht nur auf ein Etikett, sondern auch auf eine Verpackung oder ein Produkt erfolgen kann. Die Aktivierung der Bandführungseinrichtung kann dabei durch ein wahlweises Abheben bzw. Absenken der Bandführungseinrichtung von der bzw. auf die Zielfläche realisiert werden. Nach einem Abheben der Bandführungseinrichtung können darunter geförderte Etiketten weiter gefördert werden, was dann dazu führt, dass diese Etiketten in gewünschter Weise nicht mit Indikatoren versehen werden. Erst nach einem Absenken der Bandführungseinrichtung werden unter der Bandführungseinrichtung vorbei transportierte Etiketten wieder mit Indikatoren einschl. Schutzfilter ausgestattet.
- Eine Vorrichtung gemäß der zweiten Variante kann in Verbindung mit allen herkömmlichen Etiketten eingesetzt werden, da die Etiketten, bevor sie den Applikationsbereich der Bandführungseinrichtung erreichen, noch nicht mit einem Indikator ausgestattet sein müssen. Es kann somit jedes herkömmliche Etikett mit einem Indikator mit Schutzfilter versehen werden.
- Die Tatsache, dass Indikator und Schutzfilter über eine Bandführungseinrichtung aufgebracht werden, wobei für den Applikationsvorgang bevorzugt Druckverfahren eingesetzt werden, ermöglicht es, dem Indikator eine beliebige, jeweils gewünschte geometrische Form zu geben. Insbesondere kann die Form des Indikators von Zielfläche zu Zielfläche auch voneinander abweichen. Ein Umrüsten der Vorrichtung von einer Indikatorform auf eine andere Indikatorform ist praktisch ohne jeden Aufwand möglich, insbesondere müssen hierfür - im Gegensatz zur ersten, erfindungsgemäßen Variante - keine Etikettenrollen getauscht werden.

Im Folgenden werden bevorzugte Ausführungsformen der zweiten Variante erläutert.

Die Bandführungseinrichtung kann zur Führung eines insbesondere als Transferband oder Thermotransferband ausgebildeten Trägerbands ausgelegt sein, auf welchem eine Schutzfilterschicht und zugleich eine Indikatorschicht angeordnet sind, wobei sich die Indikatorschicht auf der dem Trägerband abgewandten Seite der Schutzfilterschicht befindet. So lassen sich Indikator und Schutzfilter auf besonders einfache und auch variable Weise auf die jeweilige Zielfläche aufbringen.

Im Applikationsbereich der Bandführungseinrichtung kann eine Druckwalze, ein Druckkopf, ein Thermodruckkopf oder eine beheizte Walze zum Aufbringen des Verbunds aus Schutzfilter und Indikator auf die Zielfläche vorgesehen sein. Der Einsatz von Druckwalzen oder beheizten Walzen erbringt den in Verbindung mit der ersten, erfindungsgemäßen Variante bereits genannten Vorteil, dass dem Indikator eine geometrische Form verliehen werden kann, die durch keinerlei Raster geprägt ist.

Im Bereich der Bandführungseinrichtung kann eine Aktivierungsvorrichtung zur Aktivierung von Indikatoren mittels Licht, insbesondere mittels UV-Licht vorgesehen sein, wobei die Aktivierungsvorrichtung auf einen Bereich der Bandführungseinrichtung ausgerichtet ist, welcher dem Applikationsbereich der Bandführungseinrichtung vorgeordnet ist. Es erfolgt hier also eine Aktivierung der Indikatoren, bevor diese auf die Zielfläche aufgebracht werden, was wiederum einen Unterschied zur ersten, erfindungsgemäßen Variante darstellt.

Wie auch bei der ersten, erfindungsgemäßen Variante kann eine Etikettenfördereinrichtung, insbesondere zur Förderung von Linerless- oder Trägeretiketten, vorgesehen sein, deren Förderstrecke sich durch den Applikationsbereich der Bandführungseinrichtung erstreckt. In diesem Fall kann die Bandführungseinrichtung stationär angeordnet werden, da die Etiketten zum Zweck der gleichzeitigen Applikation von Indikator und Schutzfilter an der Bandführungseinrichtung vorbeigefördert werden.

Der Etikettenfördereinrichtung kann ein Druckkopf zugeordnet werden, wobei dieser Druckkopf in Förderrichtung der Etikettenfördereinrichtung dem Applikationsbereich der Bandführungseinrichtung vor- oder nachgeordnet werden kann. Es ist also möglich, die Zielfläche vor oder nach dem Aufbringen des Indikators mit zusätzlichen Schmuckelementen oder Informationen zu versehen, wobei der Druckkopf auf Basis beliebiger Drucktechniken arbeiten kann.

Im Folgenden werden bevorzugte Ausführungsformen der Erfindung beschrieben, welche neben auf die erste auch auf die zweite Variante anwendbar sind.

Der Etikettenfördereinrichtung kann eine Applikatoreinrichtung zum Aufbringen aktivierter und mit Schutzfilter versehener Etiketten auf Produktverpackungen oder Produkte zugeordnet werden, wobei diese Applikatoreinrichtung in Förderrichtung der Etikettenfördereinrichtung dem Applikationsbereich der Bandführungseinrichtung nachgeordnet ist.

Die Bandführungseinrichtung kann einen ersten Rollenhalter und einen zweiten Rollenhalter umfassen. Dadurch lässt sich das Band von einem Vorrat abwickeln und aufwickeln, um eine Bandführung, beispielsweise synchron oder asynchron zur Führung eines Trägerbands mit Etiketten und Indikatoren, zu erreichen.

Insbesondere ist der erste Rollenhalter und/oder der zweite Rollenhalter angetrieben, um eine definierte Abwicklung bzw. Aufwicklung des Bands zu ermöglichen.

Ferner kann eine Aufnahme für einen Vorrat an aktivierbaren Indikatoren vorgesehen sein. Dadurch lässt sich eine große Anzahl von aktivierten Indikatoren innerhalb eines kurzen Zeitraums bereitstellen. Die genannte Aufnahme kann beispielsweise zum Halten einer Rolle ausgebildet sein, um als Rollenmaterial bereitgestellte Indikatoren aktivieren und gegebenenfalls mit dem Schutzfilter versehen zu können.

Wenn im Rahmen der Erfindung die Indikatoren nicht direkt auf Produktverpackungen oder Produkte, sondern lediglich auf Etiketten aufgebracht werden, können diese Etiketten sowohl selbstklebend als auch nichtselbstklebend ausgeführt sein. Diese Etiketten können ferner an einem Linerless-Etikettenband gebildet oder als Trägeretiketten auf einem Trägerband angeordnet sein.

Besonders vorteilhaft ist es, wenn der Aktivierungseinrichtung zur Aktivierung der Indikatoren ein mit einer Auswerte- und Steuereinheit verbundener Fotosensor zugeordnet wird, wobei die Auswerte- und Steuereinheit insbesondere zur Ermittlung der auf einen Indikator bezogenen Beleuchtungsdauer und/oder -stärke oder zur Kompensation von Alterungserscheinungen der Aktivierungseinrichtung ausgelegt ist.

Im letztgenannten Fall kann durch den Fotosensor geprüft werden, ob die Beleuchtungsstärke der Aktivierungseinrichtung noch stark genug ist. Sollte dies nicht der Fall sein, kann entweder die Beleuchtungsstärke hochgeregelt oder es können die Leuchtmittel der Aktivierungseinrichtung ausgetauscht werden. Wenn mit dem Fotosensor die auf einen Indikator bezogene Beleuchtungsdauer und/oder -stärke ermittelt wird, ist es möglich, bezogen auf jeden einzelnen Indikator zu dokumentieren, ob und wie lange und mit welcher Beleuchtungsstärke er aktiviert wurde. Dies kann im Regressfall von Bedeutung sein, wenn nachvollzogen werden muss, an welcher Stelle einer Produktionskette ein Fehler vorliegt. In diesem Fall ist es sinnvoll, jedem Indikator einen individuellen Code zuzuordnen, der gemeinsam mit den Beleuchtungswerten gespeichert wird, um bei einer späteren Überprüfung eines Indikators eine Zuordnung dieser gespeicherten Beleuchtungswerte vornehmen und feststellen zu können, ob der jeweilige Indikator korrekt belichtet wurde.

Die Aktivierungseinrichtung umfasst bevorzugt eine Lichtquelle, insbesondere eine Mehrzahl von LEDs oder UV-LEDs, welche beispielsweise über zumindest einen Lichtleiter mit dem Wirkbereich der Aktivierungseinrichtung verbunden sein können. Der Einsatz eines Lichtleiters ermöglicht es, die Lichtquelle relativ weit entfernt vom Wirkbereich der Aktivierungseinrichtung und damit relativ weit entfernt von den zu bestrahlenden Indikatoren anzuordnen, so dass sichergestellt ist, dass sich die im Bereich der Lichtquelle gegebene Hitzeentwicklung nicht negativ auf die zu aktivierenden Indikatoren auswirkt.

Ferner ist es möglich, zwischen Lichtquelle und Fotosensor zumindest einen Lichtleiter vorzusehen. In diesem Fall kann dann der Fotosensor zur Überwachung der Lichtquelle an einer beliebigen Position angeordnet werden. Es ist bei Einsatz dieses Lichtleiters also nicht nötig, den Fotosensor gegenüber der Lichtquelle vorzusehen, wo er eventuell von zu aktivierenden Indikatoren abgeschattet werden könnte.

Wie bereits erwähnt, nehmen die Indikatoren durch deren Aktivierung bevorzugt eine bestimmte Farbe an, welche sich zeitabhängig und/oder temperaturabhängig verändert. Dadurch lässt sich ein Indikator mit Zeitintegrationseigenschaften bzw. Temperaturintegrationseigenschaften bzw. Zeit-Temperatur-Integrationseigenschaften bereitstellen, wobei der jeweilige Integrationszustand auf einfache Weise an der jeweiligen Farbe des Indikators ablesbar ist.

Der Aktivierungseinrichtung kann in Förderrichtung der Etikettenfördereinrichtung ein mit einer Auswerte- und Steuereinheit verbundener Überprüfungs-, insbesondere Farbsensor nachgeordnet werden, wobei die Auswerte- und Steuereinheit bevorzugt zur Überprüfung der korrekten Aktivierung der Indikatoren oder zur Kompensation von Alterungserscheinungen der Aktivierungseinrichtung ausgelegt werden kann. Wenn dieser Farbsensor eingesetzt wird, um Alterungserscheinungen der Aktivierungseinrichtung zu kompensieren, liegt hier im Gegensatz zum Einsatz des vorstehend genannten Fotosensors lediglich eine indirekte Überwachung der Aktivierungseinrichtung vor, da mittels des Farbsensors nicht die Leuchtwirkung der Lichtquellen der Aktivierungseinrichtung direkt untersucht wird, sondern vielmehr deren Auswirkungen auf die aktivierten Indikatoren. Wenn mittels des Farbsensors bei vielen aufeinander folgenden Indikatoren eine nicht ausreichende Aktivierung festgestellt werden kann, ist davon auszugehen, dass die Beleuchtungsstärke der Aktivierungseinrichtung nicht mehr ausreicht. Wenn jedoch nur einzelne Indikatoren in zu geringem Maße aktiviert sind, kann davon ausgegangen werden, dass diese Indikatoren fehlerhaft sind und die Aktivierungseinrichtung korrekt arbeitet.

Der Aktivierungseinrichtung kann ein Wärmesensor, insbesondere eine Wärmebildkamera, ein Temperatursensor oder ein Thermometer zur Überprüfung der Hitzeentwicklung bei der Aktivierung von Indikatoren zugeordnet werden. In diesem Fall können bei zu starker Hitzeentwicklung, die sich negativ auf die Indikatoren auswirken könnte, geeignete Maßnahmen, beispielsweise eine geeignete Kühlung oder ein Produktionsstopp, ausgelöst werden.

Besonders vorteilhaft ist es, wenn eine Aussteuereinrichtung für nicht korrekt aktivierte Indikatoren oder für mit solchen Indikatoren versehene Etiketten, Produktverpackungen oder Produkte vorgesehen ist. Besonders sinnvoll ist eine solche Aussteuereinrichtung in Verbindung mit dem vorstehend erwähnten Farbsensor, mit dem nicht korrekte Aktivierungen festgestellt werden können.

Vorteilhaft ist es ferner, wenn in der erfindungsgemäßen Vorrichtung ein Speicher zur Erfassung von Betriebs- und Sensordaten vorgesehen ist, wobei insbesondere für jeden aktivierten Indikator ein separater Speicherplatz vorhanden ist. Alternativ kann der Speicher auch außerhalb der erfindungsgemäßen Vorrichtung vorgesehen sein, wenn die erfindungsgemäße Vorrichtung eine Schnittstelle zum Beschreiben eines solchen externen Speichers aufweist.
Mit Hilfe eines solchen Speichers kann nachträglich, insbesondere bezogen auf jeden einzelnen Indikator, überprüft werden, ob die erfindungsgemäße Vorrichtung korrekt und fehlerfrei gearbeitet hat, so dass sich letztlich eine Logbuchfunktion realisieren lässt.

Wenn der genannte Speicher nicht zum Einsatz gelangen soll, ist es alternativ möglich, jeden Indikator mit einem Code zu koppeln bzw. zu versehen, in welchem die Betriebs- und Sensordaten codiert sind, die auf den Aktivierungszeitpunkt des jeweiligen Indikators zutreffen.
Wenn der Speicher jedoch eingesetzt wird, ist es vorteilhaft, wenn jeder Indikator mit einer individuellen, insbesondere fortlaufenden Nummer versehen wird, die parallel im Speicher abgelegt wird. Der gespeicherten Nummer können dann im Speicher einige oder alle an der erfindungsgemäßen Vorrichtung eingestellten Betriebsdaten und ggf. auch die von vorhandenen Sensoren gelieferten Werte zugeordnet werden, die zum Zeitpunkt der Aktivierung des Indikators aktuell waren. Insbesondere kann in diesem Zusammenhang die individuelle Nummer, die Aktivierungszeitspanne, der absolute Aktivierungszeitpunkt, der verwendete Indikatortyp, der gekennzeichnete Produkttyp, indikatorspezifische Betriebs- und/oder Sensordaten der Applikationsvorrichtung, eine Herstellerkennung etc. gespeichert werden. Somit kann zu einem späteren Zeitpunkt in Kenntnis der mit einem jeweiligen Indikator gekoppelten Nummer durch Auslesen des Speichers überprüft werden, in welchem Zustand sich die erfindungsgemäße Vorrichtung zum Zeitpunkt der Aktivierung des jeweiligen Indikators befunden hat, was im Regressfall von erheblicher Bedeutung sein kann.

Die vorstehend genannten, im Speicher ablegbaren Informationen können jedoch auch mit allen im Rahmen dieser Anmeldung beschriebenen Druckvorrichtungen und Druckverfahren direkt oder in codierter Form auf ein Etikett, eine Produktverpackung oder ein Produkt aufgebracht werden.

Für eine Ansteuerung der erfindungsgemäßen Vorrichtung durch den Anwender sind beispielsweise folgende Möglichkeiten gegeben:
Es wird vom Anwender direkt die für die jeweils verwendeten Indikatoren gewünschte Aktivierungszeitspanne eingegeben, die dann von der Aktivierungseinrichtung entsprechend umgesetzt wird.
Ebenso kann der zu kennzeichnende Produkttyp und gegebenenfalls auch der verwendete Verpackungstyp eingegeben werden, wobei die erfindungsgemäße Vorrichtung in Abhängigkeit von diesen Eingaben unter Verwendung von in der Vorrichtung hinterlegten Algorithmen oder Tabellen die jeweils korrekte Aktivierungszeitspanne ermittelt.
Schließlich ist es auch möglich, dass der Anwender den Typ des verwendeten Indikators eingibt oder dass dieser Typ des Indikators von der erfindungsgemäßen Vorrichtung automatisch bestimmt wird, beispielsweise durch Lesen einer Kennung, die auf einem den Indikator tragenden Etikett vorhanden ist. Der somit bekannte Indikatortyp wird dann bei der automatisierten Bestimmung der korrekten Aktivierungszeitspanne berücksichtigt.

Die Vorrichtung gemäß beider Varianten lässt sich bevorzugt in ein Handgerät oder in eine automatische Etikettiermaschine integrieren, welche neben der Aktivierungseinrichtung und der Bandführungseinrichtung auch noch eine oder mehrere der nachfolgend genannten Komponenten in einem gemeinsamen Gehäuse oder an einem gemeinsamen Traggestell aufweisen können:
Etikettenfördereinrichtung, Druckeinrichtung, weitere Druckeinrichtung, Applikatoreinrichtung, Aufnahme für einen Vorrat an aktivierbaren Indikatoren, Fotosensor, Überprüfungssensor, Wärmesensor, Aussteuereinrichtung, Speicher zur Erfassung von Betriebs- und Sensordaten.

Mit einem erfindungsgemäßen Verfahren gemäß der ersten erfindungsgemäßen Variante wird die eingangs genannte Aufgabe gelöst durch das Aktivieren eines Indikators und das daran anschließende Aufbringen eines Schutzfilters auf den Indikator, wobei der Indikator entlang einer Aktivierungseinrichtung und einer in Förderrichtung daran anschließenden Schutzfilter-Applikationseinheit gefördert wird. Während dieses Fördervorgangs und insbesondere dann, wenn der Indikator an der Aktivierungseinrichtung vorbeigefördert wird, kann er sich auf einem Etikett, einer Produktverpackung oder einem Produkt befinden. Hinter der Aktivierungseinrichtung wird dann der Schutzfilter auf den Indikator aufgebracht.

Das Aufbringen des Schutzfilters erfolgt bevorzugt über ein Band in Form eines Selbstklebeetiketts oder mittels eines Druckverfahrens, insbesondere mittels Thermotransferdruck. Falls der Schutzfilter in Form eines Selbstklebeetiketts aufgebracht wird, können sowohl Linerless-Etiketten als auch Trägeretiketten zum Einsatz gelangen.

Zwischen dem Aktivieren eines Indikators und dem Aufbringen des Schutzfilters kann ein Bedrucken von den Indikator tragenden Etiketten, Produktverpackungen oder Produkten erfolgen. Besonders bevorzugt ist es, wenn ein solches Bedrucken nur dann erfolgt, wenn zuvor, beispielsweise mittels eines vorstehend bereits erwähnten Farbsensors, eine korrekte Aktivierung des Indikators festgestellt werden konnte. Es ist in diesem Fall dann auch für eine Bedienperson einer erfindungsgemäßen Vorrichtung ohne weiteres feststellbar, ob ein Indikator korrekt aktiviert wurde oder nicht, da nur die korrekt belichteten Indikatoren mit einem entsprechenden Druckbild gekoppelt sind. Insbesondere kann dann bei nicht vorhandenem Druckbild ein Ausschleusen des jeweiligen Indikators oder eines damit versehenen Etiketts oder einer damit versehenen Produktverpackung oder eines damit versehenen Produkts erfolgen.

Der mit dem erfindungsgemäßen Verfahren aufgebrachte Schutzfilter kann den Indikator und ein diesen umgebendes Vergleichsfeld abdecken, welches beispielsweise Referenzfarben aufweist, anhand derer der jeweilige Zustand des Indikators für einen Betrachter leichter ablesbar wird. Wie bereits erläutert, führt ein auch das Vergleichsfeld abdeckender Schutzfilter dazu, dass zwischen Vergleichsfeld und Indikator keine Farbverschiebungen für einen Betrachter auftreten können.

Gemäß einem Verfahren entsprechend der zweiten Variante wird ein bereits mit einem Schutzfilter verbundener Indikator aktiviert. In diesem Fall entfällt das Aufbringen des Schutzfilters nach der Aktivierung des Indikators. Vielmehr wird bereits ein Verbund aus Indikator und Schutzfilter aktiviert, wobei beispielsweise eine Bestrahlung des Indikators mit Licht von derjenigen Seite erfolgen kann, auf der kein Schutzfilter vorhanden ist.

Bevorzugt ist es, wenn ein Verbund aus Indikator- und Schutzfilterschicht entlang einer Aktivierungseinrichtung gefördert wird, da diese selbst dann stationär ausgebildet werden kann.

Vor dem Aufbringen des Indikators mit Schutzfilter auf ein Etikett, eine Produktverpackung oder ein Produkt kann die korrekte Aktivierung des Indikators überprüft werden. Bei nicht korrekter Aktivierung erfolgt dann bevorzugt ein Ausschleusen des Indikators, eines damit versehenen Etiketts, einer damit versehenen Produktverpackung oder eines damit versehenen Produkts. Bevorzugt ist es, wenn lediglich der Indikator oder ein damit versehenes Etikett ausgeschleust wird, da in diesem Fall kein unnötiges Aussteuern von Produktverpackungen oder Produkten erfolgt.

Es ist vorteilhaft, wenn vor oder nach dem Aufbringen des Indikators mit Schutzfilter auf ein Etikett, eine Produktverpackung oder ein Produkt ein Bedrucken des Etiketts, der Produktverpackung oder des Produkts erfolgt.

Der Verbund aus aktiviertem Indikator und Schutzfilter kann über ein Band in Form eines Selbstklebeetiketts oder mittels eines Druckverfahrens, insbesondere mittels Thermotransferdruck, auf eine Produktverpackung oder ein Produkt aufgebracht werden.

Die Erfindung ermöglicht eine Warenkennzeichnung, hergestellt mit einer Vorrichtung oder einem Verfahren der vorstehend beschriebenen Art. Eine solche Warenkennzeichnung umfasst einen Träger und einen an dem Träger angeordneten Indikator, welcher nach Aktivierung durch Licht, insbesondere UV-Licht, temperatursensitiv und/oder zeitsensitiv ist, wobei ein Schutzfilter, insbesondere ein UV-Schutzfilter, auf den Indikator aufgebracht, insbesondere aufgedruckt ist. Der vorstehend erwähnte Träger kann als Etikett, Verpackung oder Produkt ausgebildet sein.

Insbesondere ist der Träger oder eine am Träger angeordnete Lage außerhalb des Indikators bedruckbar, insbesondere mit Informationen beinhaltenden Daten oder mit Schmuckelementen. Ein solcher Aufdruck kann zumindest einen Code umfassen, welcher zumindest eine, bevorzugt mehrere, der nachfolgenden Informationen beinhaltet:
Aktivierungszeitpunkt, individuelle Nummer, indikatorspezifische Betriebs- und/oder Sensordaten der Applikationsvorrichtung, Indikatortyp, Produkttyp, Herstellerkennung.

Bevorzugt ist der erwähnte Schutzfilter auch auf einem Vergleichsfeld angeordnet, welches insbesondere Referenzfarben aufweist. Hierdurch können die vorstehend bereits erläuterten Vorteile erreicht werden.

Weitere bevorzugte Ausführungsformen der Erfindung sind in den Unteransprüchen genannt.

Die Erfindung wird nachfolgend anhand bevorzugter Ausführungsformen unter Bezugnahme auf die Zeichnungen erläutert; in diesen zeigen:
- Fig. 1: eine schematische Darstellung eines ersten Ausführungs-beispiels einer Vorrichtung zur Bereitstellung von aktivierten Indikatoren zur Warenkennzeichnung gemäß der ersten, erfindungsgemäßen Variante,
- Fig. 2: ein zweites Ausführungsbeispiel einer Vorrichtung zur Bereitstellung von Indikatoren zur Warenkennzeichnung gemäß der ersten erfindungsgemäßen Variante,
- Fig. 3: eine vergrößerte Darstellung aus dem Bereich A gemäß Fig. 1 und 2 in perspektivischer Ansicht,
- Fig. 4: eine schematische Darstellung von Ausführungsbeispielen eines Indikators in seiner Zeitabhängigkeit und Temperaturabhängigkeit nach der Aktivierung, und
- Fig. 5: ein drittes Ausführungsbeispiel einer Vorrichtung zur Bereitstellung von Indikatoren zur Warenkennzeichnung gemäß der zweiten Variante.

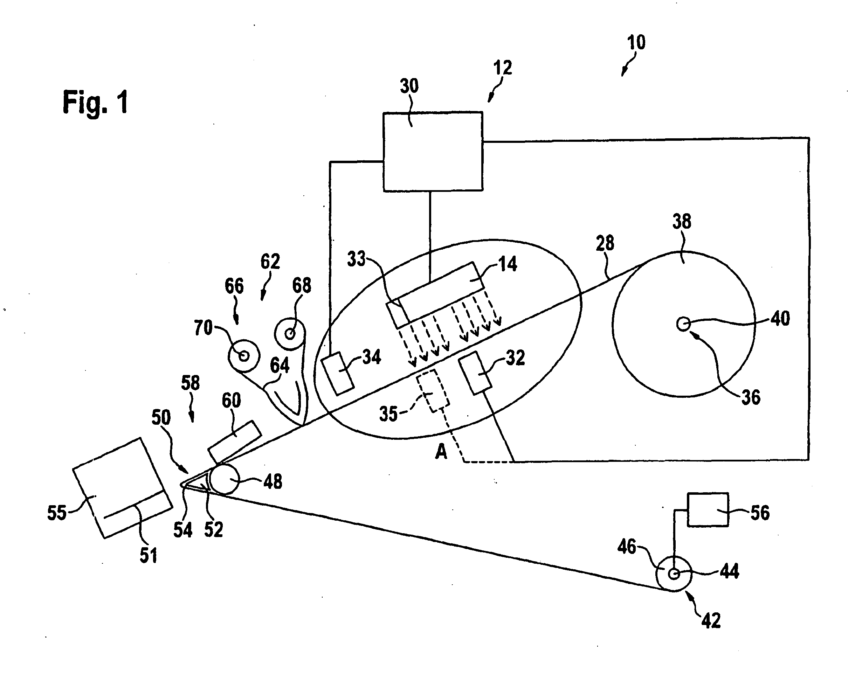

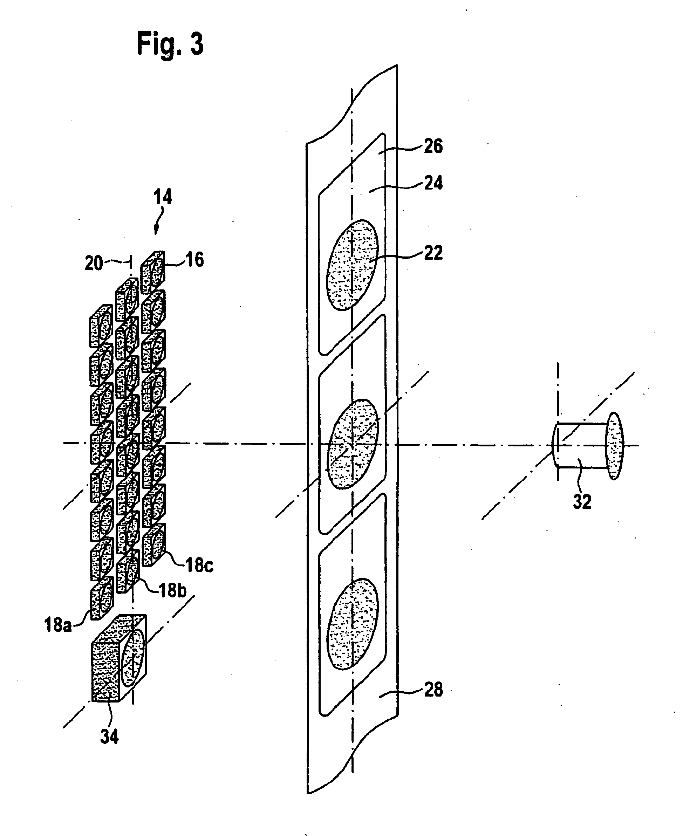

Ein erstes Ausführungsbeispiel einer erfindungsgemäßen Vorrichtung zur Bereitstellung von aktivierten temperatursensitiven und/oder zeitintensiven Indikatoren zur Warenkennzeichnung, welches in Figur 1 gezeigt und dort mit 10 bezeichnet ist, umfasst eine Aktivierungsvorrichtung 12 zur Aktivierung von Indikatoren. Die Aktivierungsvorrichtung 12 weist eine UV-Lichtquelleneinrichtung 14 auf, durch welche zu aktivierende Indikatoren mit UV-Licht beleuchtbar sind. Die UV-Lichtquelleneinrichtung 14 ist mittels UV-Leuchtdioden 16 (Figur 3) gebildet. Die Leuchtdioden 16 sind in einer oder mehreren Reihen 18a, 18b, 18c angeordnet. Innerhalb einer Reihe befinden sich die UV-Leuchtdioden 16 vorzugsweise auf einer geraden Linie 20. Unterschiedliche Reihen 18a, 18b, 18c sind vorzugsweise parallel zueinander ausgerichtet.

Die UV-Lichtquelleneinrichtung 14 ist so angeordnet, dass ein bestimmter Flächenbereich von der UV-Lichtquelleneinrichtung 14 beleuchtbar ist. Durch diesen Flächenbereich lassen sich Indikatoren 22 durchführen. Die Indikatoren 22 sind insbesondere an einem Träger 24 angeordnet, wobei es sich bei dem Träger 24 vorzugsweise um ein (bedruckbares) Etikett 26 handelt. Ein Etikett 26 kann bereits mit einem oder mehreren Vergleichsfeldern für einen Indikator 22 bedruckt sein; beispielsweise ist ein Vergleichsfeld als Vergleichsfarbenfeld ausgebildet. Es ist dabei möglich, dass die Etiketten 26 getrennt sind oder ein zusammenhängendes Etikettenband bilden. Es ist weiterhin möglich, dass die Träger 24 für die Indikatoren 22 selbst wieder auf einem Trägerband 28 angeordnet sind. Beispielsweise sind die Etiketten 26 selbstklebend und das Trägerband 28 bildet einen Liner.

Es ist auch grundsätzlich möglich, dass die Etiketten 26 trägerbandfrei als Linerless-Etiketten ausgebildet sind.

Die Aktivierungsvorrichtung 12 umfasst eine Steuerungs-/ Regelungsvorrichtung 30, durch welche die Lichtemission der UV-Lichtquelleneinrichtung 14 bezüglich Bestrahlungszeit und Bestrahlungsstärke (Intensität) steuerbar und/oder regelbar ist. Die Steuerungs-/Regelungseinrichtung 30 steuert bzw. regelt insbesondere die Lichterzeugung an den UV-Leuchtdioden 16 selbst. Dazu wird die Strombeaufschlagung der UV-Lichtquelleneinrichtung 14 gesteuert bzw. geregelt, um die Bestrahlungsstärke und die Bestrahlungszeit einstellen zu können.

Es ist dabei vorgesehen, dass die Bestrahlungszeit mindestens für einen Zeitraum zwischen 0,05 s und 20 s und vorzugsweise zwischen 0,1 s und 10 s einstellbar ist und ferner die Bestrahlungsstärke mindestens in einem Bereich zwischen 25 mW/cm² und 400 mW/cm² und vorzugsweise zwischen 50 mW/cm² bis 200 mW/cm² einstellbar ist.

Die Wellenlänge des Lichts, welches von den UV-Lichtdioden 16 ausgestrahlt wird, liegt vorzugsweise zwischen 350 nm und 380 nm.

Der UV-Lichtquelleneinrichtung 14 ist mindestens ein UV-lichtempfindlicher Fotosensor 32 zugeordnet. Dieser mindestens eine Fotosensor 32 ist der UV-Lichtquelleneinrichtung 14 gegenüberliegend angeordnet, wobei die Indikatoren 22 zwischen der UV-Lichtquelleneinrichtung 14 und dem Fotosensor 32 durchführbar sind. Durch den Fotosensor 32 lässt sich die Bestrahlungsstärke/Bestrahlungszeit der UV-Lichtquelleneinrichtung 14 prüfen. Dadurch lässt sich eine Kalibrierung der Aktivierungsvorrichtung 12 beispielsweise vor Einlegen eines neuen Etikettenbands durchführen. Durch den Fotosensor 32 lässt sich (beispielsweise vor Einlegen eines neuen Etikettenbands) auch prüfen, ob von der UV-Lichtquelleneinrichtung 14 überhaupt Licht emittiert wird. Dadurch lässt sich eine Störung der UV-Lichtquelleneinrichtung 14 erkennen.

Es kann auch eine Referenz-Lichtquelleneinrichtung 33 vorgesehen sein, welche vorzugsweise gleich angesteuert wird wie die UV-Lichtquelleneinrichtüng 14. Insbesondere weist die Referenz-Lichtquelleneinrichtung 33 ein oder mehrere baugleiche UV-Leuchtdioden wie die Lichtquelleneinrichtung 14 auf. Der Referenz-Lichtquelleneinrichtung 33 ist ein weiterer Fotosensor 35 zugeordnet, welcher von dieser bestrahlt wird. Der Fotosensor 35 und die Referenz-Lichtquelleneinrichtung 33 sind so angeordnet, dass die Strahlbeaufschlagung des Fotosensors 35 nicht durch durchgeführte Etiketten beschattet wird. Da die Referenz-Lichtquelleneinrichtung 33 im wesentlichen die gleichen Eigenschaften wie die UV-Lichtquelleneinrichtung 14 aufweist, lässt sich letztere - indirekt - ständig durch den Fotosensor 35 überwachen und gegebenenfalls nachregeln.

Die Aktivierungsvorrichtung 12 umfasst ferner mindestens einen Überprüfungssensor 34, welcher bezogen auf den bzw. die Träger 24 für die Indikatoren 22 auf der gleichen Seite wie die UV-Lichtquelleneinrichtung 14 angeordnet ist. Dieser Überprüfungssensor 34 ist insbesondere ein Farbsensor. Durch ihn kann hinter der UV-Lichtquelleneinrichtung 14 überprüft werden, ob eine Aktivierung tatsächlich und im erforderlichen Umfang stattgefunden hat, das heißt ob der gewünschte Energieübertrag auf die Indikatoren 22 tatsächlich erfolgt ist.

Beispielsweise kann mit Hilfe des Fotosensors 32 und der Steuerungs-/ Regelungseinrichtung 30 ein Regelkreis realisiert werden, über den die Alterung der Lichtquellen der UV-Lichtquelleneinrichtung 14 (das heißt der UV Leuchtdioden 16) automatisch ausgeregelt wird, indem die Bestrahlungsstärke und/oder die Bestrahlungszeit entsprechend der Alterung automatisch nachgeregelt wird.

Es ist auch grundsätzlich möglich, dass kein Fotosensor 32 bzw. 35 und nur ein Überprüfungssensor 34 vorgesehen wird.

Der Fotosensor 32 (und gegebenenfalls der Fotosensor 35) und der Überprüfungssensor 34 übermitteln ihre Sensorsignale über entsprechende Leitungen an die Steuerungs-/Regelungseinrichtung 30. Diese übermittelt ihre Steuerungssignale bzw. Regelungssignale über eine entsprechende Leitung an die UV-Lichtquelleneinrichtung 14.

Die Vorrichtung 10 umfasst eine Aufnahme 36 zum Halten einer Rolle 38. Die Rolle 38 ist beispielsweise eine Trägerbandrolle mit einem abwickelbaren Trägerband 28, auf welchem die Indikatoren 22 an entsprechenden Trägern 24 (beispielsweise Etiketten 26) angeordnet sind. Das Trägerband 28 ist zwischen der UV-Lichtquelleneinrichtung 14 und dem Fotosensor 32 geführt und an dem Überprüfungssensor 34 vorbeigeführt.

Die Aufnahme 36 umfasst beispielsweise einen Haltedorn 40 für die Rolle 38.

Es kann eine Halteeinrichtung 42 vorgesehen sein, welche insbesondere einen Haltedorn 44 umfasst, durch die eine Rolle 46 mit aufgewickeltem Trägerband gehalten wird.

Die Vorrichtung 10 umfasst ein Umlenkelement 48, über welches das Trägerband 28 zu der Halteeinrichtung 42 umgelenkt wird. An oder in der Nähe des Umlenkelements 48 ist eine Spendeeinrichtung 50 für Etiketten gebildet. An der Spendeeinrichtung 50 lassen sich Etiketten 51 von dem Trägerband 28 lösen und von der Vorrichtung 10 entnehmen. (Die Vorrichtung 10 ist dann eine Etikettiervorrichtung.) Die Spendeeinrichtung 50 umfasst beispielsweise ein keilförmiges Element 52 mit einer Spendekante 54.

Die Rolle 46 wird durch ein etikettenfreies Trägerband gebildet, das heißt ein Trägerband, welches aufgrund Ablösung von Etiketten 51 an der Spendeeinrichtung 50 etikettenfrei ist.

Der Spendeeinrichtung 50 kann eine Applikatoreinrichtung 55 nachgeordnet sein, über die Etiketten 51 an Waren bzw. Warenverpackungen applizierbar sind. Dadurch lässt sich eine automatische Etikettenanbringung realisieren. Beispielsweise werden Etiketten (mit aktivierten Indikatoren 22) an Waren/Warenverpackungen, welche auf einem Förderband geführt sind, automatisch angebracht.

Die Applikatoreinrichtung 55 ist beispielsweise als Blas-, Stempel- oder Andrückapplikator ausgebildet.

Es kann vorgesehen sein, dass die Halteeinrichtung 42 durch einen Antrieb 56 angetrieben ist, um entsprechend das Trägerband aufzuwickeln.

Es ist auch möglich, dass die Etiketten selbst ein Band bilden, so dass kein Trägerband vorgesehen ist (Linerless-Etiketten). Die Führung des entsprechenden Etikettenbands in der Vorrichtung 10 ist dann so ausgebildet, dass Elemente der Führung, welche, wenn die Etiketten selbstklebend sind, mit einer Klebeseite des Etikettenbands in Berührung kommen, mit einer Antihaft-Beschichtung versehen sind.

Die Vorrichtung 10 umfasst mindestens eine Druckeinrichtung 58. Die Druckeinrichtung 58 selbst weist einen Druckkopf 60 und ein Gegenelement und insbesondere eine Druckwalze auf. Insbesondere ist das Umlenkelement 48 als Druckwalze ausgebildet.

Die Vorrichtung 10 besitzt zudem eine Aufbringeinrichtung 62, durch welche ein UV-Schutzfilter auf einen Indikator 22 nach dessen Aktivierung aufbringbar ist. Durch den UV-Schutzfilter ist ein Schutz eines Indikators gegen Manipulation erreicht; ein Indikator 22 kann nach Aufbringung des Schutzfilters nicht erneut aktiviert werden, so dass die Vorrichtung 10 irreversibel aktivierte Indikatoren 22 bereitstellt.

Über die Aufbringeinrichtung 62 lässt sich ein UV-Schutzfilter auf einen Indikator 22 über ein Band 64 aufbringen, wobei das Band entsprechende UV-Schutzfiltereigenschaften hat. Die Aufbringeinrichtung 62 umfasst dazu eine Bandführungseinrichtung 66, über welche das Band 64 so führbar ist, dass W-Schutzfilter auf die aktivierten Indikatoren 22 aufbringbar sind.

Beispielsweise umfasst das Band 64 ein UV-Schutzfilter und ist transparent ausgebildet; es kann auch selbstklebend sein, wobei sich das Filtermaterial bevorzugt im Klebstoff befindet. Es wird in Teilelementen (als Etiketten) auf jeweilige Indikatoren 22 aufgebracht oder fortlaufend aufgebracht.

Die Bandführungseinrichtung 66 umfasst beispielsweise einen ersten Rollenhalter 68 und einen zweiten Rollenhalter 70. Auf den ersten Rollenhalter 68 ist eine Bandrolle aufsetzbar und das Band ist von dort abwickelbar. Über den zweiten Rollenhalter 70 lässt sich eine Rolle aufwickeln. Der zweite Rollenhalter 70 ist beispielsweise angetrieben.

Die Vorrichtung 10 lässt sich kompakt ausbilden. Beispielsweise ist sie als Handgerät ausgebildet. Sie ist auch in einen Etikettierer mit Applikatoreinrichtung 55 integrierbar. Es lassen sich dann Etiketten mit aktivierten Indikatoren 22 bereitstellen und automatisch an Waren/Warenverpackungen anbringen.

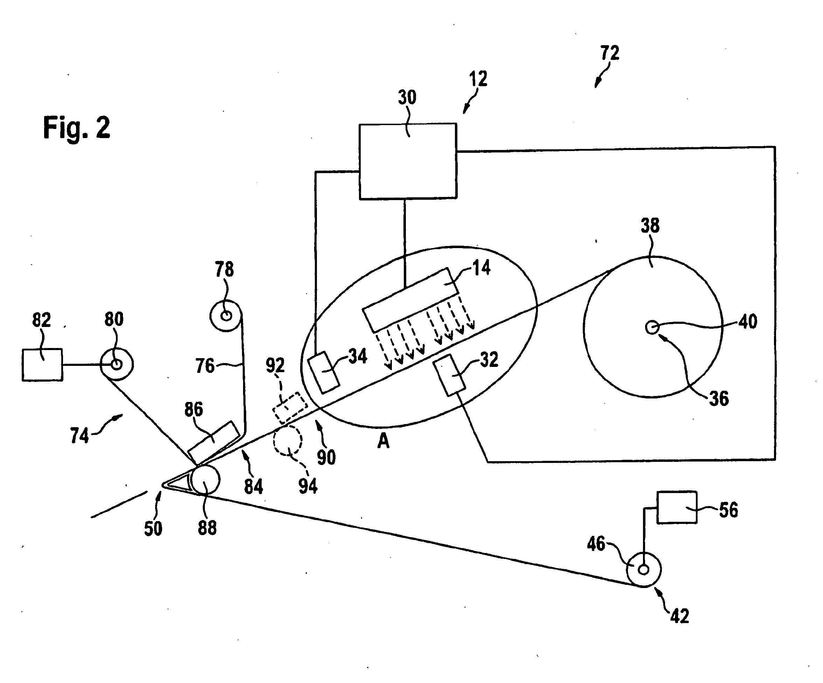

Bei einem zweiten Ausführungsbeispiel einer erfindungsgemäßen Vorrichtung, welches in Figur 2 und dort mit 72 bezeichnet ist, ist eine Aktivierungsvorrichtung 12 vorgesehen, welche grundsätzlich gleich ausgebildet ist wie die Aktivierungsvorrichtung 12 der Vorrichtung 10. Es werden deshalb für diese Aktivierungsvorrichtung der Vorrichtung 72 gleiche Bezugszeichen verwendet.

Die Aufnahme für eine Rolle 38 ist ebenfalls gleich ausgebildet, so dass gleiche Bezugszeichen verwendet werden. Auch die Spendeeinrichtung ist grundsätzlich gleich ausgebildet wie oben beschrieben.

Die Vorrichtung 72 umfasst eine Bandführungseinrichtung 74 für ein Transferband 76. Bei dem Transferband 76 handelt es sich beispielsweise um ein Thermotransferband.

Die Bandführungseinrichtung 74 weist einen ersten Rollenhalter 78 und einen zweiten Rollenhalter 80 auf, zwischen welchen das Transferband 76 geführt ist. Insbesondere wird das Transferband 76 von einer Rolle, welche an dem ersten Rollenhalter 78 sitzt, abgewickelt und an einer Rolle, welche an dem zweiten Rollenhalter 80 sitzt, aufgewickelt. Beispielsweise ist der zweite Rollenhalter 80 über einen Antrieb 82 angetrieben.

Die Vorrichtung 72 umfasst eine Druckeinrichtung 84 mit einem Druckkopf 86 und einer Druckwalze als Gegenelement 88. Etiketten 26 an einem Etikettenband bzw. auf einem Trägerband 28 werden zwischen dem Druckkopf 86 und dem Gegenelement 88 durchgeführt.

Die Bandführungseinrichtung 74 ist so ausgebildet, dass das Transferband 76 an dem Druckkopf 86 vorbeigeführt ist. Das Transferband 76 umfasst ein UV-Schutzfiltermaterial. Durch den Druckkopf 86 lässt es sich dann auf entsprechende aktivierte Indikatoren 22 aufbringen.

Der Druckkopf 86 ist dabei so steuerbar, dass sich UV-Schutzfiltermaterial gezielt auf den Indikator 22 entsprechend dessen geometrischen Abmessungen aufbringen lässt.

Es ist dabei grundsätzlich möglich, (wenn das Transferband 76 dazu geeignet ist) entsprechende Etiketten 26 auch außerhalb des Indikators 22 mit Informationen wie beispielsweise Wareninformationen durch die Druckeinrichtung 84 zu bedrucken.

Es ist auch möglich, dass neben der Druckeinrichtung 84 (erste Druckeinrichtung) eine zweite Druckeinrichtung 90 vorgesehen ist, welche zwischen der Druckeinrichtung 84 und der Aktivierungseinrichtung 12 angeordnet sein kann oder der Druckeinrichtung 84 nachgeschaltet angeordnet sein kann. Die zweite Druckeinrichtung 90 umfasst insbesondere einen Druckkopf 92 und ein Gegenelement 94. Durch die zweite Druckeinrichtung 90 lassen sich unabhängig von der Druckeinrichtung 84 Informationen auf Etiketten 26 abdrucken.

Es kann auch vorgesehen sein, dass die Vorrichtung 72 Etiketten mit aktivierten und UV-Schutzfiltern versehenen Indikatoren 22 bereitstellt, die in eine Etikettiervorrichtung mit einer Druckeinrichtung eingekoppelt werden, um die Etiketten außerhalb der Indikatoren 22 mit Information wie beispielsweise Warendaten zu bedrucken. In diesem Falle ist es günstig, wenn die Vorrichtung 72 keine einzelnen Etiketten bereitstellt, sondern ein Band wie beispielsweise ein Etikettenband oder ein Trägerband 28 mit nicht abgelösten Etiketten.

### Die Vorrichtungen 10 und 72 funktionieren wie folgt:

Ein Indikator 22 ist aus einem Material hergestellt, welches durch UV-Licht aktivierbar und temperatursensitiv und zeitsensitiv ist, das heißt nach der Anregung des Materials ist die Abregung abhängig von der Zeit nach Anregung und von der Temperatur. Insbesondere ist der Indikator 22 ein Zeit-/Temperatur-Indikator mit einer Integrationswirkung bezüglich Zeit und Temperatur. Die Startzeit ist dabei durch den Aktivierungszeitpunkt bestimmt.

Beispiele für Indikatormaterialien sind in eine Matrix eingebettete wiederaufladbare kristalline Indikatoren mit fotochromen Eigenschaften auf der Basis von Transferreaktionen. Solche Materialien sind beispielsweise in der DE 198 03 208 C2 beschrieben

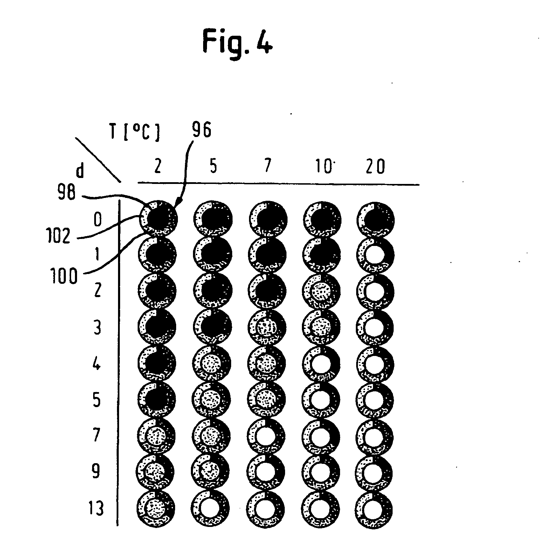

Beispielsweise kann ein Indikator je nach Zeit und Temperatur verschiedene Farben aufweisen. Es kann dabei vorgesehen sein, dass an einem Indikator 96 (Figur 4) mindestens ein festes Vergleichsfarbfeld angeordnet ist, damit der Zustand mit den Augen sofort erkennbar ist. Beispielsweise ist ein erstes, dunkles Farbenfeld 98 vorgesehen, welches die Farbe unmittelbar nach der Aktivierung anzeigt. Es kann ein zweites, etwas helleres Farbenfeld 100 vorgesehen sein, welches die Farbe - bei gleichen Temperaturbedingungen - nach einem mittleren Zeitraum anzeigt. Es kann ein drittes, noch helleres Farbenfeld 102 vorgesehen sein, welches die Farbe - bei gleichen Temperaturbedingungen - nach einem längeren Zeitraum anzeigt. Die Farben der Farbenfelder 98, 100 und 102 sind fest. Die Farbe des ersten Farbenfeldes symbolisiert beispielsweise einen Zustand "frisch", die Farbe des zweiten Farbenfeldes 100 einen Zustand "mittel" und die Farbe des dritten Farbenfeldes 102 symbolisiert beispielsweise einen Zustand "nicht mehr frisch".

Wenn nur ein Vergleichsfarbenfeld vorgesehen ist, symbolisiert es beispielsweise den Zustand "zu verbrauchen" bzw. "nicht mehr frisch".

Der farbenveränderliche Indikator 96 ist beispielsweise kreisförmig ausgebildet, wobei die Farbenfelder 98, 100 und 102 den Indikator ringsegmentförmig umgeben.

Die Farbe des Indikators 96 ändert sich nach der Aktivierung entsprechend einem Zeit-Temperatur-Integral, wie in Figur 4 angedeutet. Bei höheren Temperaturen ändert sich die Farbe des Indikators 96 mit der Zeit schneller als bei niedrigeren Temperaturen.

Ein solcher aktivierter Indikator 96 lässt sich zur Warenkennzeichnung verwenden. Nach Aufbringen einer entsprechenden Warenkennzeichnung mit einem Indikator 96 durchläuft dieser Indikator 96 die gleiche Zeitentwicklung und Temperaturentwicklung wie die Ware, welche mit dem Indikator 96 gekennzeichnet ist, das heißt er ist den gleichen Zeitbedingungen und Temperaturbedingungen unterworfen. Durch den temperatursensitiven und zeitsensitiven Indikator 96 lässt sich dadurch der Warenzustand und insbesondere der Frischgrad der Ware visualisieren. Dadurch lassen sich beispielsweise Lebensmittel bezüglich ihres Frischegrads kennzeichnen.

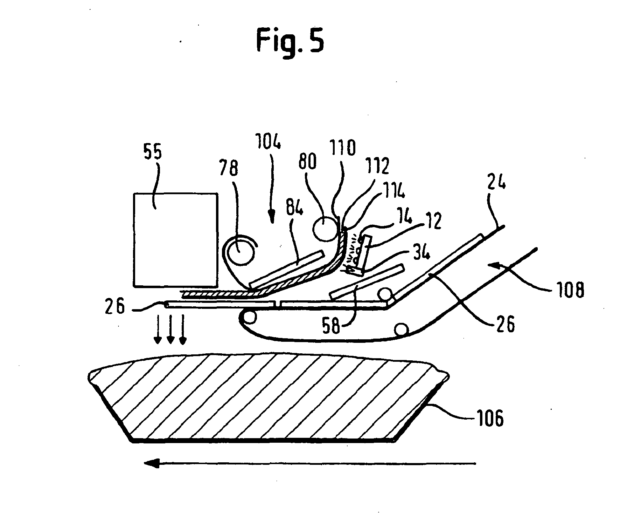

Die in Verbindung mit Fig. 4 erläuterten Eigenschaften eines Indikators können in identischer Weise auch auf solche Indikatoren zutreffen, die mit einer Vorrichtung gemäß der nachfolgend noch erläuterten Fig. 5 verarbeitet werden.

Die Startzeit wird durch den Aktivierungszeitpunkt gesetzt. Die Indikatoren 96 werden dazu der Aktivierungsvorrichtung 12 zugeführt, wo eine Aktivierung durch UV-Licht erfolgt. Durch die Aktivierung mit UV-Licht werden beispielsweise Transferreaktionen in dem Indikatormaterial fotochemisch induziert, wobei je nach Bindungsstärke eines Akzeptors der transferierten Spezies im Akzeptormaterial verschieden lange Entfärbungszeiten erreicht werden können (vgl. die DE 198 03 208 C2).

Durch die Steuerungs-/Regelungseinrichtung 30 ist die Bestrahlungsstärke und/oder die Bestrahlungszeit der Bestrahlung mit UV-Licht von entsprechenden Indikatoren 22, 96 einstellbar. Dadurch kann zumindest in einem gewissen Bereich die Zeitsensitivität und/oder Temperatursensitivität eines aktivierten Indikators 22 eingestellt werden. Beispielsweise kann bei erhöhter Bestrahlungsstärke eine längere Entfärbungszeit (bezogen auf gleiche Temperaturbedingungen) erreicht werden. Über die Steuerungs- / Regelungseinrichtung 30 kann daher ein Bediener die gewünschten Eigenschaften einstellen.

Über den Fotosensor 32 lässt sich eine Kalibrierung der UV-Lichtquelleneinrichtung 14 durchführen und es lässt sich überwachen, ob ein Defekt bezüglich der Beleuchtung vorliegt.

Über den Überprüfungssensor 34, bei dem es sich insbesondere um einen Farbsensor handelt, lässt sich überprüfen, ob durch die Aktivierung ein Indikator 22 die gewünschte Farbe erreicht hat.

Durch die Aufbringeinrichtung 62 bzw. die Druckeinrichtung 84 (die als Aufbringeinrichtung dient) wird ein UV-Schutzfilter auf einen aktivierten Indikator 22 aufgebracht. Dadurch wird der Indikator 22 manipulationssicher gemacht, da eine erneute Aktivierung durch UV-Licht nicht mehr möglich ist, das heißt durch den UV-Schutzfilter wird die Aktivierung irreversibel gemacht. Nur durch Ablösung des UV-Schutzfilters (die zu einer Zerstörung des Indikators 22 führt) wäre eine erneute UV-Lichtaktivierung möglich.

Es kann auch vorgesehen sein, dass ein UV-Schutzfilter auf das oder die Vergleichsfarbfelder aufgebracht wird. Insbesondere wenn ein UV-Schutzfilter für Licht im sichtbaren Spektrum nicht völlig transparent ist, lässt sich dadurch die Farbvergleichbarkeit optimieren.

Der UV-Schutzfilter wird über ein Band auf die Indikatoren 22 aufgebracht, wobei das Band direkt aufgebracht werden kann oder (wie anhand der Vorrichtung 72 beschrieben) ein Übertrag von UV-Schutzfiltermaterial von dem Transferband 76 auf einen aktivierten Indikator 22 erfolgt. Bei dem Transferband 76 handelt es sich insbesondere um ein Thermotransferband wie beispielsweise ein Carbonband, auf dem entsprechendes UV-Schutzfiltermaterial angeordnet ist.

Dieses wird über die Druckeinrichtung 84 mit dem Druckkopf 86 auf den Indikator 22 übertragen. Der Druckkopf 86 ist so ansteuerbar, dass UV-Schutzfiltermaterial entsprechend den geometrischen Abmessungen des Indikators 22 auf diesen "aufgedruckt" wird.

Dadurch lassen sich die vorhandenen Komponenten einer Etikettiervorrichtung mit einer Thermotransfer-Druckeinrichtung dazu verwenden, einen UV-Schutzfilter auf Indikatoren 22 anzuordnen.

Die Indikatoren 22 sind auf Trägern 24 wie beispielsweise Etiketten 26 angeordnet. Die Etiketten 26 sind wiederum auf einem Trägerband 28 angeordnet oder selbst an einem Etikettenband gebildet. Die Indikatoren 22 werden zur Aktivierung an der UV-Lichtquelleneinrichtung 14 vorbeigeführt. Nach der Aktivierung wird das UV-Schutzfiltermaterial aufgebracht.

Es kann vorgesehen sein, dass die entsprechenden Etiketten 26 außerhalb der Indikatoren 22 mit Informationen wie beispielsweise Warendaten bedruckt werden. Dieses Bedrucken kann durch die Vorrichtung 72 selbst (dort durch die zweite Druckeinrichtung 90) oder außerhalb der Vorrichtung 72 erfolgen.

Es ist auch grundsätzlich möglich, dass, wenn ein geeignetes Transferband 76 vorliegt, durch die Druckeinrichtung 84 auch ein Bedrucken der Etiketten 26 außerhalb der Indikatoren 22 erfolgt.

Es ist auch möglich, dass durch die Vorrichtung 72 bereitgestellte Etiketten 26, welche mit aktivierten Indikatoren 22 versehen sind, einer Etikettiervorrichtung zugeführt werden, in welcher sie bedruckt werden.

Figur 5 zeigt ein drittes Ausführungsbeispiel einer Vorrichtung, wobei dieses Ausführungsbeispiel gemäß der zweiten Variante ausgebildet ist.

Für Elemente der Vorrichtung gemäß Figur 5, die eine Entsprechung in den Vorrichtungen gemäß den Fig. 1 und 2 finden, sind jeweils gleiche Bezugszeichen verwendet.

Die dargestellte Vorrichtung ist mit einer Etikettenfördereinrichtung 108 ausgestattet, mittels welcher auf einem Trägerband 24 angeordnete Etiketten 26 entlang einer ersten Druckeinrichtung 58, einer Bandführungseinrichtung 104 mit zweiter Druckeinrichtung 84 bis zu einer Applikatoreinrichtung 55 gefördert werden können. Die Etiketten 26 können dabei herkömmlicher Art sein, was bedeutet, dass sie keinerlei spezielle Indikatoren oder Beschichtungen tragen müssen.

Wenn die Etiketten durch die Etikettenfördereinrichtung 108 an der ersten Druckeinrichtung 58 vorbeigefördert werden, kann diese erste Druckeinrichtung 58 dafür sorgen, dass die Etiketten 26 in einer jeweils gewünschten Weise mit Informationen oder Schmuckelementen bedruckt werden. Insbesondere lassen sich hier in codierter oder uncodierter Form einige oder alle derjenigen Informationen aufbringen, die vorstehend erwähnt wurden (z.B. Aktivierungszeitpunkt, individuelle Nummer, indikatorspezifische Betriebs- und/oder Sensordaten der Applikationsvorrichtung, Indikatortyp, Produkttyp, Herstellerkennung) und die sich dann letztlich in der Regel neben dem noch aufzubringenden Indikator befinden werden.

Die in Förderrichtung der Etikettenfördereinrichtung 108 der ersten Druckeinrichtung 58 nachgeordnete Bandführungseinrichtung 104 weist zwei Rollenhalter 78, 80 auf, mittels derer ein 3-Schicht-Verbund an der Druckeinrichtung 84 vorbei gefördert werden kann. Der genannte 3-Schicht-Verbund besteht aus einer der zweiten Druckeinrichtung 84 zugewandten Trägerschicht 110, an die sich eine UV-Schutzfilterschicht 112 und eine Indikatorschicht 114 in der genannten Reihenfolge anschließen.

Bei einem Abwickeln des 3-Schicht-Verbunds 110, 112, 114 vom Bereich des Rollenhalters 80 und einem Aufwickeln der hinter der zweiten Druckeinrichtung 84 verbleibenden Trägerschicht 110 im Bereich des Rollenhalters 78 befindet sich folglich die Indikatorschicht 114 auf der der Etikettenfördereinrichtung 108 zugewandten Seite des 3-Schicht-Verbunds 110, 112, 114, so dass die Indikatorschicht 114, wie in Figur 5 veranschaulicht, von einer Aktivierungsvorrichtung 12 beaufschlagt werden kann.

Die Aktivierungsvorrichtung 12 besitzt eine aus mehreren UV-Dioden bestehende UV-Lichtquelleneinrichtung 14, die die Indikatorschicht 114, nachdem sie den Bereich des Rollenhalters 80 verlassen hat, gesteuert und geregelt mit UV-Licht beaufschlagt.

In Förderrichtung der Bandführungseinrichtung 104 ist der Aktivierungsvorrichtung 12 ein als Farbsensor ausgebildeter Überprüfungssensor 34 nachgeordnet, mittels welchem die korrekte Einfärbung der Indikatorschicht 114 überprüft werden kann. Das Ergebnis dieser Überprüfung wird dann insbesondere zum Regeln der Beleuchtungsstärke und der Beleuchtungszeitspanne der Aktivierungsvorrichtung 12 verwendet.

Wenn festgestellt wird, dass ein Indikator nicht ausreichend aktiviert wurde, kann die Bandführungseinrichtung 104 von der Etikettenfördereinrichtung 108 abgehoben werden, um so den nicht korrekt aktivierten Indikator durch einen fortgesetzten Antrieb der Bandführungseinrichtung 104 in den Bereich des Rollenhalters 78 zu bewegen, wodurch dieser Indikator praktisch ausgesteuert wird. Während dieses Aussteuerns kann die Etikettenfördereinrichtung 108 angehalten werden. Nach einem an das Aussteuern des Indikators anschließenden Absenken der Bandführungseinrichtung 104 kann dann auch dasjenige Etikett mit einem korrekt aktivierten Indikator versehen werden, welches ursprünglich für den nicht korrekt aktivierten Indikator vorgesehen war. So kann letztlich ein lückenloser Fluss von mit korrekt aktivierten Indikatoren versehenen Etiketten auch dann sichergestellt werden, wenn einzelne Indikatoren oder bestimmte Bereiche der Indikatorschicht 114 nicht korrekt aktiviert wurden.

Hinter der Aktivierungsvorrichtung 12 gelangt dann der 3-Schicht-Verbund 110, 112, 114 mit aktivierter Indikatorschicht 114 in den Bereich der zweiten Druckeinrichtung 84, welche dazu geeignet ist, die Indikatorschicht 114 gemeinsam mit der UV-Schutzfilterschicht 112 in einer jeweils gewünschten geometrischen Form auf die Oberfläche eines bereits über die erste Druckeinrichtung 58 bedruckten Etiketts 26 zu übertragen.

Das fertige Etikett 26 mit Aufdruck, Indikator und Schutzfilter gelangt dann schließlich mittels der Etikettenfördereinrichtung 108 in den Bereich einer Applikatoreinrichtung 55, welche dazu geeignet ist, das fertige Etikett 26 mit Indikatorschicht und Schutzfilterschicht auf ein Produkt oder eine Produktverpackung 106 zu übertragen.

### Bezugszeichenliste

- 10: Vorrichtung
- 12: Aktivierungsvorrichtung
- 14: Lichtquelleneinrichtung
- 16: Leuchtdioden
- 18a, b, c: Reihen von Leuchtdioden
- 20: gerade Linie
- 22: Indikatoren
- 24: Träger
- 26: Etikett
- 28: Trägerband
- 30: Steuerungs-/Regelungsvorrichtung
- 32: Photosensor
- 33: Referenz-Lichtquelleneinrichtung
- 34: Überprüfungssensor
- 35: Photosensor
- 36: Aufnahme
- 38: Rolle
- 40: Haltedorn
- 42: Halteeinrichtung
- 44: Haltedorn
- 46: Rolle
- 48: Umlenkelement
- 50: Spendeeinrichtung
- 51: Etikett
- 52: keilförmiges Element
- 54: Spendekante
- 55: Applikatoreinrichtung
- 56: Antrieb
- 58: Druckeinrichtung
- 60: Druckkopf
- 62: Aufbringeinrichtung
- 64: Band
- 66: Bandführungseinrichtung
- 68: erster Rollenhalter
- 70: zweiter Rollenhalter
- 72: Vorrichtung
- 74: Bandführungseinrichtung
- 76: Transferband
- 78: erster Rollenhalter
- 80: zweiter Rollenhalter
- 82: Antrieb
- 84: Druckeinrichtung
- 86: Druckkopf
- 88: Druckwalze
- 90: Druckeinrichtung
- 92: Druckkopf
- 94: Gegenelement
- 96: Indikator
- 98: erstes Farbenfeld
- 100: zweites Farbenfeld
- 102: drittes Farbenfeld
- 104: Bandführungseinrichtung
- 106: Produkt
- 108: Etikettenfördereinrichtung
- 110: Trägerschicht
- 112: W-Schutzfilterschicht
- 114: Indikatorschicht

## Patentansprüche

1. Vorrichtung zur Bereitstellung von aktivierten temperatursensitiven und/oder zeitsensitiven Indikatoren (22; 96) zur Warenkennzeichnung,
**gekennzeichnet durch**
eine Bandführungseinrichtung (66; 74), **durch** welche ein Band (64; 76) führbar ist, über das in einem Applikationsbereich der Bandführungseinrichtung ein Schutzfilter, insbesondere ein UV-Schutzfilter auf einen Indikator (22; 96) nach dessen Aktivierung aufbringbar ist.

2. Vorrichtung nach Anspruch 1,
**dadurch gekennzeichnet,**
**dass** das Band (64) als Schutzfilterband ausgebildet ist oder ein Schutzfilter von dem Band (76) auf einen Indikator (22; 96) übertragbar ist.

3. Vorrichtung nach einem der vorhergehenden Ansprüche.
**dadurch gekennzeichnet,**
**dass** das von der Bandführungseinrichtung (74) geführte Band ein Transferband (76), insbesondere ein Thermotransferband ist.

4. Vorrichtung nach einem der Ansprüche 1 oder 2.
**dadurch gekennzeichnet,**
**dass** das von der Bandführungseinrichtung (74) geführte Band ein Trägerband ist, auf dem selbstklebende Schutzfilteretiketten angeordnet sind.

5. Vorrichtung nach einem der vorhergehenden Ansprüche.
**dadurch gekennzeichnet,**
**dass** eine Etikettenfördereinrichtung (38, 46) zur Förderung von mit Indikatoren versehenen Etiketten, insbesondere zur Förderung von Linerless- oder Trägeretiketten, vorgesehen ist, deren Förderstrecke sich durch den Applikationsbereich der Bandführungseinrichtung (66, 74) erstreckt.

6. Vorrichtung nach Anspruch 5,
**dadurch gekennzeichnet,**
**dass** der Etikettenfördereinrichtung (38, 46) eine Aktivierungsvorrichtung (12) zur Aktivierung von Indikatoren (22; 96) mittels Licht, insbesondere mittels UV-Licht zugeordnet ist, wobei diese Aktivierungsvorrichtung (12) in Förderrichtung der Etikettenfördereinrichtung dem Applikationsbereich der Bandführungseinrichtung (66, 74) vorgeordnet ist.

7. Vorrichtung nach einem der vorhergehenden Ansprüche,
**dadurch gekennzeichnet,**
**dass** mindestens eine, insbesondere der Etikettenfördereinrichtung (38, 46) zugeordnete Druckeinrichtung (58; 84; 90) vorgesehen ist.

8. Vorrichtung nach Anspruch 7,
**dadurch gekennzeichnet,**
**dass** die Druckeinrichtung (58; 90) in Förderrichtung der Etikettenfördereinrichtung (38, 46) dem Applikationsbereich der Bandführungseinrichtung (66, 74) vor- oder nachgeordnet ist.

9. Vorrichtung nach einem der Ansprüche 7 oder 8,
**dadurch gekennzeichnet,**
**dass** die Druckeinrichtung (58; 90) in Förderrichtung der Etikettenfördereinrichtung (38, 46) der Aktivierungsvorrichtung (12) vor- oder nachgeordnet ist.

10. Vorrichtung nach einem der Ansprüche 7 bis 9,
**dadurch gekennzeichnet,**
**dass** die mindestens eine Druckeinrichtung (58; 90) einen Druckkopf (60; 86; 92) und ein Gegenelement (48; 94) umfaßt.

11. Vorrichtung nach Ansprüche 7,
**dadurch gekennzeichnet,**
**dass** die mindestens eine Druckeinrichtung (84) zum Aufbringen eines Schutzfilters auf einen Indikator (22; 96) im Bereich der Bandführungseinrichtung (74) einen Thermodruckkopf oder eine beheizte Walze aufweist.

12. Vorrichtung nach Anspruche 11,
**dadurch gekennzeichnet,**
**dass** die Druckeinrichtung (84) bezüglich ihrer Beaufschlagung des Bands (76) steuerbar ist.

13. Vorrichtung nach einem der Ansprüche 7 bis 12,
**dadurch gekennzeichnet,**
**dass** durch die mindestens eine Druckeinrichtung (58; 84; 90) ein Etikett (26) außerhalb des Indikators (22; 96) bedruckbar ist:

14. Vorrichtung nach einem der Ansprüche 7 bis 13,
**dadurch gekennzeichnet,**
**dass** eine erste Druckeinrichtung (84) als Aufbringeinrichtung für den Schutzfilter und eine zweite Druckeinrichtung (90) zum Bedrucken eines Etiketts (26) außerhalb eines Indikators (22; 96) vorgesehen ist.

15. Vorrichtung nach Anspruch 5 oder einem der Ansprüche 6 bis 14, sofern rückbezogen auf Anspruch 5,
**dadurch gekennzeichnet,**
**dass** der Etikettenfördereinrichtung (38, 46) eine Applikatoreinrichtung (55) zum Aufbringen aktivierter und mit Schutzfilter versehener Etiketten (26, 51) auf Produktverpackungen (106) oder Produkte zugeordnet ist, wobei diese Applikatoreinrichtung (55) in Förderrichtung der Etikettenfördereinrichtung (38, 46) dem Applikationsbereich der Bandführungseinrichtung (66, 74) nachgeordnet ist.

16. Vorrichtung nach einem der vorhergehenden Ansprüche,
**dadurch gekennzeichnet,**
**dass** die Bandführungseinrichtung (66; 74) einen ersten Rollenhalter (68) und einen zweiten Rollenhalter (70) umfaßt.

17. Vorrichtung nach Anspruch 16,
**dadurch gekennzeichnet,**
**dass** der erste Rollenhalter (68) und/oder der zweite Rollenhalter (70) angetrieben ist.

18. Vorrichtung nach einem der vorhergehenden Ansprüche,
**dadurch gekennzeichnet,**
**dass** eine Aufnahme (36) für einen Vorrat (38) an aktivierbaren Indikatoren (22; 96) vorgesehen ist.

19. Vorrichtung nach Anspruch 18,
**dadurch gekennzeichnet,**
**dass** die Aufnahme (36) zum Halten einer Rolle (38) ausgebildet ist.

20. Vorrichtung nach Anspruch 6 oder einem der Ansprüche 7 bis 19, sofern rückbezogen auf Anspruch 6,
**dadurch gekennzeichnet,**
**dass** der Aktivierungseinrichtung (12) ein mit einer Auswerte- und Steuereinheit verbundener Fotosensor (32) zugeordnet ist, wobei die Auswerte- und Steuereinheit insbesondere zur Ermittlung der auf einen Indikator bezogenen Beleuchtungsdauer und/oder -stärke oder zur Kompensation von Alterungserscheinungen der Aktivierungseinrichtung (12) ausgelegt ist.

21. Vorrichtung nach Anspruch 6, oder einem der Ansprüche 7 bis 20, sofern rückbezogen auf Anspruch 6,
**dadurch gekennzeichnet,**
**dass** die Aktivierungseinrichtung (12) eine Lichtquelle, insbesondere eine Mehrzahl von LEDs (16) oder UV-LEDs, umfasst, welche bevorzugt über zumindest einen Lichtleiter mit dem Wirkbereich der Aktivierungseinrichtung (12) verbunden sind.

22. Vorrichtung nach Anspruch 20 und Anspruch 21,
**dadurch gekennzeichnet,**
**dass** zwischen Lichtquelle und Fotosensor zumindest ein Lichtleiter vorgesehen ist.

23. Vorrichtung nach einem der vorhergehenden Ansprüche,
**dadurch gekennzeichnet,**
**dass** die Indikatoren (22; 96) durch Aktivierung eine bestimmte Farbe annehmen, welche sich zeitabhängig und/oder temperaturabhängig verändert.

24. Vorrichtung nach Anspruch 6, oder einem der Ansprüche 7 bis 23, sofern rückbezogen auf Anspruch 6,
**dadurch gekennzeichnet,**
**dass** der Aktivierungseinrichtung (12) in Förderrichtung der Etikettenfördereinrichtung (38, 46) ein mit einer Auswerte- und Steuereinheit verbundener Überprüfungs-, insbesondere Farbsensor. (34) nachgeordnet ist, wobei die Auswerte- und Steuereinheit insbesondere zur Überprüfung der korrekten Aktivierung der Indikatoren oder zur Kompensation von Alterungserscheinungen der Aktivierungseinrichtung (12) ausgelegt ist.

25. Vorrichtung nach Anspruch 6, oder einem der Ansprüche 7 bis 24, sofern rückbezogen auf Anspruch 6,
**dadurch gekennzeichnet,**
**dass** der Aktivierungseinrichtung (12) ein Wärmesensor, insbesondere eine Wärmebildkamera, ein Temperatursensor oder ein Thermometer zur Überprüfung der Hitzeentwicklung bei der Aktivierung von Indikatoren zugeordnet ist.

26. Vorrichtung nach einem der vorhergehenden Ansprüche,
**dadurch gekennzeichnet,**
**dass** eine Aussteuereinrichtung für nicht korrekt aktivierte Indikatoren oder für mit solchen Indikatoren versehene Etiketten, Produktverpackungen oder Produkte vorgesehen ist.

27. Vorrichtung nach einem der vorhergehenden Ansprüche,
**dadurch gekennzeichnet,**
**dass** ein Speicher zur Erfassung von Betriebs- und Sensordaten vorgesehen ist, wobei insbesondere für jeden aktivierten Indikator ein separater Speicherplatz vorhanden ist.

28. Handgerät oder Etikettiermaschine mit einer Vorrichtung nach Anspruch 6 oder einem der Ansprüche 7 bis 27, sofern rückbezogen auf Anspruch 6,
**dadurch gekennzeichnet,**
**dass** die Aktivierungseinrichtung (12) und die Bandführungseinrichtung (66, 74) und insbesondere auch eine oder mehrere der nachfolgend genannten Komponenten in einem gemeinsamen Gehäuse oder an einem gemeinsamen Traggestell angeordnet sind: Etikettenfördereinrichtung (38, 46), Druckeinrichtung (58; 84; 90), weitere Druckeinrichtung, Applikatoreinrichtung (55), Aufnahme (36) für einen Vorrat (38) an aktivierbaren Indikatoren (22; 96), Fotosensor (32), Überprüfungssensor (34), Wärmesensor, Aussteuereinrichtung, Speicher zur Erfassung von Betriebs- und Sensordaten.

29. Verfahren zur Bereitstellung von aktivierten temperatursensitiven und/oder zeitsensitiven Indikatoren (22; 96) zur Warenkennzeichnung, mit den Schritten:
das Aktivieren eines Indikators und das daran anschließende Aufbringen eines Schutzfilters auf den Indikator, **dadurch gekennzeichnet, dass** der Indikator entlang einer Aktivierungseinrichtung (12) und einer in Förderrichtung daran anschließenden Schutzfilter-Applikationseinheit (66, 74) gefördert wird.

30. Verfahren nach Anspruch 29,
**dadurch gekennzeichnet,**
**dass** der Schutzfilter über ein Band (64, 76) in Form eines Selbstklebeetiketts oder mittels eines Druckverfahrens, insbesondere mittels Thermotransferdruck, aufgebracht wird.

31. Verfahren nach einem der Ansprüche 29 oder 30,
**dadurch gekennzeichnet,**
**dass** zwischen dem Aktivieren eines Indikators und dem Aufbringen des Schutzfilters ein Bedrucken von den Indikator tragenden Etiketten, Produktverpackungen oder Produkten erfolgt.

32. Verfahren nach Anspruch 31,
**dadurch gekennzeichnet,**
**dass** ein Bedrucken nur dann erfolgt, wenn zuvor eine korrekte Aktivierung des Indikators festgestellt werden konnte.

33. Verfahren nach Anspruch 32,
**dadurch gekennzeichnet,**
**dass** bei nicht vorhandenem Druckbild und/oder nicht korrekter Aktivierung ein Ausschleusen des Indikators oder eines damit versehenen Etiketts, einer damit versehenen Produktverpackung oder eines damit versehenen Produkts erfolgt.

34. Verfahren nach einem der Ansprüche 29 bis 33,
**dadurch gekennzeichnet,**
**dass** der Schutzfilter den Indikator (96) und ein diesen umgebendes, Referenzfarben aufweisendes Vergleichsfeld (98; 100; 102) abdeckt.

## Claims

1. An apparatus for the provision of activated temperature-sensitive and/or time-sensitive indicators (22; 96) for product marking,
**characterized by**
a tape guiding device (66; 74) through which a tape (64; 76) can be guided via which a protective filter, in particular a UV protective filter, can be applied in an application region of the tape guiding device to an indicator (22; 96) after its activation.

2. An apparatus in accordance with claim 1, **characterized in that** the tape (64) is made as a protective filter tape or a protective filter can be transferred from the tape (76) to an indicator (22; 96).

3. An apparatus in accordance with any one of the preceding claims, **characterized in that** the tape guided by the tape guiding device (74) is a transfer tape (76), in particular a thermal transfer tape.

4. An apparatus in accordance with claim 1 or claim 2, **characterized in that** the tape guided by the tape guiding device (74) is a carrier tape on which self-adhesive protective filter labels are arranged.

5. An apparatus in accordance with any one of the preceding claims, **characterized in that** a label conveying device (38, 46) is provided for the conveying of labels provided with indicators, in particular for the conveying of linerless labels or carrier labels, whose conveying path extends through the application region of the tape guiding device (64, 74).

6. An apparatus in accordance with claim 5, **characterized in that** an activation device (12) for the activation of indicators (22; 96) by means of light, in particular by means of UV light, is associated with the label conveying device (38, 46), with said activation device (12) being disposed in front of the application region of the tape guiding device (66, 74) in the conveying direction of the label conveying device

7. An apparatus in accordance with any one of the preceding claims, **characterized in that** at least one printing device (58; 84; 90) is provided, in particular a printing device associated with the label conveying device (38, 46).

8. An apparatus in accordance with claim 7, **characterized in that** the printing device (58; 90) is disposed in front of or behind the application region of the tape guiding device (66, 74) in the conveying direction of the label conveying device (38, 46).

9. An apparatus in accordance with one of the claims 7 or 8, **characterized in that** the printing device (58; 90) is disposed in front of or behind the activation device (12) in the conveying direction of the label conveying device (38, 46).

10. An apparatus in accordance with any one of the claims 7 to 9, **characterized in that** the at least one printing device (58; 90) comprises a print head (60; 86; 92) and a mating element (48; 94).

11. An apparatus in accordance with claim 7, **characterized in that** the at least one printing device (84) has a thermal print head or a heated roll for the application of a protective filter onto an indicator (22; 96) in the region of the tape guiding device (74).

12. An apparatus in accordance with claim 11, **characterized in that** the printing device (84) can be controlled with respect to its action on the tape (76).

13. An apparatus in accordance with any one of the claims 7 to 12, **characterized in that** a label (26) can be printed outside the indicator (22; 96) by the at least one printing device (58; 84; 90).

14. An apparatus in accordance with any one of the claims 7 to 13, **characterized in that** a first printing device (84) is provided as an application device for the protective filter and a second printing device (90) is provided for the printing of a label (26) outside an indicator (22; 96).

15. An apparatus in accordance with claim 5 or any one of the claims 6 to 14, provided it is dependent on claim 5, **characterized in that** an applicator device (55) for the application of activated labels (26, 51) provided with protective filters onto product packaging (106) or products is associated with the label conveying device (38, 46), with said applicator device (55) being disposed after the application region of the tape guiding device (66, 74) in the conveying direction of the label conveying device (66, 74).

16. An apparatus in accordance with any one of the preceding claims, **characterized in that** the tape guiding device (66; 74) comprises a first roll holder (68) and a second roll holder (70).

17. An apparatus in accordance with claim 16, **characterized in that** the first roll holder (68) and/or the second roll holder (70) is/are driven.

18. An apparatus in accordance with any one of the preceding claims, **characterized in that** a receiver (36) is provided for a stock (38) of activatable indicators (22; 96).

19. An apparatus in accordance with claim 18, **characterized in that** the receiver (36) is made for the holding of a roll (38).

20. An apparatus in accordance with claim 6 or any one of the claims 7 to 19, provided it is dependent on claim 6, **characterized in that** a photosensor (32) connected to an evaluation and control unit is associated with the activation device (12), with said evaluation and control unit in particular being configured for the determination of the illumination period and/or illumination intensity relating to an indicator or for the compensation of aging phenomena of the activation device (12).

21. An apparatus in accordance with claim 6 or any one of the claims 7 to 20, provided it is dependent on claim 6, **characterized in that** the activation device (12) includes a light source, in particular a plurality of LEDs (16) or UV LEDs, which are preferably connected to the active region of the activation device (12) via at least one light conductor.

22. An apparatus in accordance with claim 20 and claim 21, **characterized in that** at least one light conductor is provided between the light source and the photosensor.

23. An apparatus in accordance with any one of the preceding claims, **characterized in that** the indicators (22; 96) adopt a specific color by activation which changes in dependence on time and/or on temperature.

24. An apparatus in accordance with claim 6 or any one of the claims 7 to 23, provided it is dependent on claim 6, **characterized in that** a check sensor, in particular a color sensor (34), connected to a control and evaluation unit is disposed after the activation device (12) in the conveying direction of the label conveying device (38, 46), with said evaluation and control unit in particular being configured for the checking of the correct activation of the indicators or for the compensation of aging phenomena of the activation device (12).

25. An apparatus in accordance with claim 6 or any one of the claims 7 to 24, provided it is dependent on claim 6, **characterized in that** a thermal sensor, in particular a thermal imaging camera, a temperature sensor or a thermometer, is associated with the activation device (12) for the checking of the heat development in the activation of indicators.

26. An apparatus in accordance with any one of the preceding claims, **characterized in that** an elimination device is provided for incorrectly activated indicators or for labels, product packaging or products provided with such indicators.

27. An apparatus in accordance with one of the preceding claims, **characterized in that** a memory is provided for the detection of operating data and sensor data, with a separate memory position in particular being present for each activated indicator.

28. A hand-held device or a labeling machine comprising an apparatus in accordance with claim 6 or any one of the claims 7 to 27, provided it is dependent on claim 6,
**characterized in that**
the activation device (12) and the tape guiding device (66, 74), and in particular also one or more of the components named in the following, are arranged in a common housing or at a common support frame: label conveying device (38, 46), printing device (58; 84; 90), further printing device , applicator device (55), receiver (36) for a stock (38) of activatable indicators (22; 96), photosensor (32), check sensor (34), thermal sensor, elimination device, memory for the detection of operating data and sensor data.

29. A method for the provision of activated temperature-sensitive and/or time-sensitive indicators (22; 96) for product marking, comprising the steps:
the activation of an indicator and the subsequent application of a protective filter to the indicator,
**characterized in that**
the indicator is conveyed along an activation device (12) and along a protective filter application unit (66, 74) subsequent to it in the conveying direction.

30. A method in accordance with claim 29, **characterized in that** the protective filter is applied via a tape (64, 76) in the form of a self-adhesive label or by means of a printing process, in particular by means of thermal transfer printing.

31. A method in accordance with one of the claims 29 or 30, **characterized in that** a printing of labels, product packaging or products bearing the indicator takes place between the activation of an indicator and the application of the protective filter.

32. A method in accordance with claim 31, **characterized in that** a printing only takes place when a correct activation of the indicator was previously able to be determined.

33. A method in accordance with claim 32, **characterized in that** an ejection of the indicator or of a label provided therewith, of product packaging provided therewith or of a product provided therewith takes place on a non-present print image and/or an incorrect activation.

34. A method in accordance with any one of the claims 29 to 33, **characterized in that** the protective filter covers the indicator (96) and a comparison field (98; 100; 102) surrounding it and comprising reference colors.

## Revendications

1. Dispositif de préparation d'indicateurs (22 ; 96) activés sensibles à la température et/ou sensibles au temps pour le marquage de produits,
**caractérisé par**
un dispositif de guidage de bande (66 ; 74) par lequel une bande (64 ; 76) peut être guidée, via laquelle dans une zone d'application du dispositif de guidage de bande, un filtre de protection, en particulier un filtre de protection UV peut être appliqué sur un indicateur (22 ; 96) après son activation.

2. Dispositif selon la revendication 1,
**caractérisé en ce que**
la bande (64) est réalisée sous forme de bande servant de filtre de protection ou un filtre de protection peut être transmis de la bande (76) sur un indicateur (22 ; 96).

3. Dispositif selon l'une quelconque des revendications précédentes,
**caractérisé en ce que**
la bande guidée par le dispositif de guidage de bande (74) est une bande de transfert (76), en particulier une bande de transfert thermique.

4. Dispositif selon l'une des revendications 1 ou 2,
**caractérisé en ce que**
la bande guidée par le dispositif de guidage de bande (74) est une bande support sur laquelle sont agencées des étiquettes autocollantes servant de filtre de protection.

5. Dispositif selon l'une quelconque des revendications précédentes,
**caractérisé en ce que**
il est prévu un dispositif de convoyage d'étiquettes (38, 46) pour convoyer des étiquettes pourvues d'indicateurs, en particulier pour convoyer des étiquettes dites "linerless" ou des étiquettes à supports dont le trajet de convoyage s'étend à travers la zone d'application du dispositif de guidage de bande (66, 74).

6. Dispositif selon la revendication 5,
**caractérisé en ce que**
au dispositif de convoyage d'étiquettes (38, 46) est associé un dispositif d'activation (12) pour activer des indicateurs (22 ; 96) au moyen de lumière, en particulier de lumière UV, ce dispositif d'activation (12) étant agencé en direction de convoyage du dispositif de convoyage d'étiquettes en amont de la zone d'application du dispositif de guidage de bande (66, 74).

7. Dispositif selon l'une quelconque des revendications précédentes,
**caractérisé en ce que**
il est prévu au moins une imprimante (58 ; 84 ; 90) associée en particulier au dispositif de convoyage d'étiquettes (38, 46).

8. Dispositif selon la revendication 7,
**caractérisé en ce que**
l'imprimante (58 ; 90) est agencée en direction de convoyage du dispositif de convoyage d'étiquettes (38, 46), en amont ou en aval de la zone d'application du dispositif de guidage de bande (66, 74).

9. Dispositif selon l'une des revendications 7 ou 8,
**caractérisé en ce que**
l'imprimante (58 ; 90) est agencée en direction de convoyage du dispositif de convoyage d'étiquettes (38, 46) en amont ou en aval du dispositif d'activation (12).

10. Dispositif selon l'une des revendications 7 à 9,
**caractérisé en ce que**
ladite au moins une imprimante (58 ; 90) comprend une tête d'imprimante (60 ; 86 ; 92) et un élément antagoniste (48 ; 94).

11. Dispositif selon la revendication 7,
**caractérisé en ce que**
ladite au moins une imprimante (84) présente une tête d'imprimante thermique ou un rouleau chauffé pour appliquer un filtre de protection sur un indicateur (22 ; 96) dans la zone du dispositif de guidage de bande (74).

12. Dispositif selon la revendication 11,
**caractérisé en ce que**
l'imprimante (84) est commandable du point de vue de sa sollicitation de la bande (76).

13. Dispositif selon l'une des revendications 7 à 12,
**caractérisé en ce que**
par ladite au moins une imprimante (58 ; 84 ; 90), une étiquette (26) peut être imprimée en dehors de l'indicateur (22 ; 96).

14. Dispositif selon l'une des revendications 7 à 13,
**caractérisé en ce que**
une première imprimante (84) est prévue en tant que dispositif applicateur pour le filtre de protection et une deuxième imprimante (90) pour l'impression d'une étiquette (26) en dehors d'un indicateur (22 ; 96).

15. Dispositif selon la revendication 5, ou l'une des revendications 6 à 14, prises en dépendance de la revendication 5,
**caractérisé en ce que**
au dispositif de convoyage d'étiquettes (38, 46) est associé un dispositif applicateur (55) pour appliquer des étiquettes (26, 51) activées et pourvues d'un filtre de protection sur des emballages de produits (106) ou sur des produits, ce dispositif applicateur (55) étant agencé en direction de convoyage du dispositif de convoyage d'étiquettes (38, 46) en aval de la zone d'application du dispositif de guidage de bande (66, 74).

16. Dispositif selon l'une quelconque des revendications précédentes,
**caractérisé en ce que**
le dispositif de guidage de bande (66 ; 74) comprend un premier porte-rouleau (68) et un deuxième porte-rouleau (70).

17. Dispositif selon la revendication 16,
**caractérisé en ce que**
le premier porte-rouleau (68) et/ou le deuxième porte-rouleau (70) est entraîné.

18. Dispositif selon l'une quelconque des revendications précédentes,
**caractérisé en ce que**
il est prévu un logement (36) pour une réserve (38) d'indicateurs (22 ; 96) activables.

19. Dispositif selon la revendication 18,
**caractérisé en ce que**
le logement (36) est réalisé pour maintenir un rouleau (38).

20. Dispositif selon la revendication 6 ou l'une des revendications 7 à 19, prises en dépendance de la revendication 6,
**caractérisé en ce que**
au dispositif d'activation (12) est associé un photocapteur (32) relié à une unité d'évaluation et de commande, l'unité d'évaluation et de commande étant conçue en particulier pour déterminer la durée d'éclairage concernant un indicateur et/ou l'intensité d'éclairage ou pour compenser des phénomènes de vieillissement du dispositif d'activation (12).

21. Dispositif selon la revendication 20, ou l'une des revendications 7 à 20, prises en dépendance de la revendication 6,
**caractérisé en ce que**
le dispositif d'activation (12) comprend une source lumineuse, en particulier une pluralité de diodes électroluminescentes (16) ou de diodes électroluminescentes UV qui sont reliées de préférence via au moins un guide de lumière avec la zone active du dispositif d'activation (12).

22. Dispositif selon les revendications 20 et 21,
**caractérisé en ce que**
au moins un guide de lumière est prévu entre la source lumineuse et le photocapteur.

23. Dispositif selon l'une quelconque des revendications précédentes,
**caractérisé en ce que**
les indicateurs (22 ; 96) prennent par activation une couleur déterminée qui change en fonction du temps et/ou de la température.

24. Dispositif selon la revendication 6 ou l'une des revendications 7 à 23, prises en dépendance de la revendication 6,
**caractérisé en ce que**
un capteur de vérification, en particulier un capteur de couleurs (34) relié à une unité d'évaluation et de commande est agencé en aval du dispositif d'activation (12) en direction de convoyage du dispositif de convoyage d'étiquettes (38, 46), l'unité d'évaluation et de commande étant conçue en particulier pour vérifier l'activation correcte des indicateurs ou pour compenser des phénomènes de vieillissement du dispositif d'activation (12).

25. Dispositif selon la revendication 6 ou l'une des revendications 7 à 24, prises en dépendance de la revendication 6,
**caractérisé en ce que**
au dispositif d'activation (12) est associé un capteur thermique, en particulier une caméra à rayonnement thermique, un capteur de température ou un thermomètre pour vérifier le développement de chaleur lors de l'activation d'indicateurs.

26. Dispositif selon l'une quelconque des revendications précédentes,
**caractérisé en ce que**
un dispositif de réglage est prévu pour des indicateurs non correctement activés ou pour des étiquettes, des emballages de produits ou des produits pourvu(e)s de tels indicateurs.

27. Dispositif selon l'une quelconque des revendications précédentes,
**caractérisé en ce que**
il est prévu une mémoire pour saisir des données de fonctionnement et de capteurs, un emplacement de mémoire séparé étant en particulier présent pour chaque indicateur activé.

28. Appareil manuel ou machine à étiqueter comportant un dispositif selon la revendication 6 ou l'une des revendications 7 à 27, prises en dépendance de la revendication 6,
**caractérisé en ce que**
le dispositif d'activation (12) et le dispositif de guidage de bande (66, 74) et en particulier aussi un ou plusieurs des composants cités ci-après sont agencés dans un boîtier commun ou dans un cadre porteur commun: dispositif de convoyage d'étiquettes (38, 46), imprimante (58 ; 84 ; 90), autre imprimante, dispositif applicateur (55), logement (36) pour une réserve (38) de indicateurs (22 ; 96) activables, photocapteur (32), capteur de vérification (34), capteur thermique, dispositif de réglage, mémoire pour saisir des données de fonctionnement et de capteurs.

29. Procédé de fourniture d'indicateurs (22 ; 96) activés sensibles à la température et/ou sensibles au temps pour le marquage de produits, présentant les étapes suivantes :
l'activation d'un indicateur et l'application consécutive d'un filtre de protection sur l'indicateur, **caractérisé en ce que** l'indicateur est convoyé le long d'un dispositif d'activation (12) et d'une unité d'application de filtre de protection (66, 74) qui suit en direction de convoyage.

30. Procédé selon la revendication 29,
**caractérisé en ce que**
le filtre de protection est appliqué via une bande (64, 76) en forme d'une étiquette autocollante ou au moyen d'un procédé d'impression, en particulier au moyen d'une impression par transfert thermique.

31. Procédé selon l'une des revendications 29 ou 30.
**caractérisé en ce que**
entre l'activation d'un indicateur et l'application du filtre de protection a lieu une impression des étiquettes, des emballages de produits ou des produits portant l'indicateur.

32. Procédé selon la revendication 31.
**caractérisé en ce que**
une impression n'a lieu que si auparavant, on a pu constater une activation correcte de l'indicateur.

33. Procédé selon la revendication 32,
**caractérisé en ce que**
en l'absence d'image d'impression et/ou en cas d'activation non correcte a lieu une élimination de l'indicateur ou d'une étiquette pourvue de celui-ci, d'un emballage de produit pourvu de celui-ci ou d'un produit pourvu de celui-ci.

34. Procédé selon l'une des revendications 29 à 33,
**caractérisé en ce que**
le filtre de protection recouvre l'indicateur (96) et un champ de comparaison (98: 100: 102) présentant des couleurs de référence et entourant celui-ci.
